# EUROPEAN PATENT APPLICATION

(11) **EP 4 561 133 A1**
(43) Date of publication of application: **28.05.2025**
(21) Application number: 23854120.5
(22) Date of filing: 29.06.2023
(51) Int. Cl.: H04W 12/06

(54) **COMMUNICATION METHOD AND APPARATUS**

(30) Priority: 18.08.2022 CN 202210994211
(71) Applicant: Huawei Technologies Co., Ltd., Shenzhen, Guangdong 518129 (CN)
(72) Inventor: LI, Lun, Shenzhen, Guangdong 518129 (CN); WU, Yizhuang, Shenzhen, Guangdong 518129 (CN); LIU, Dan, Shenzhen, Guangdong 518129 (CN); HU, Li, Shenzhen, Guangdong 518129 (CN); HU, Huadong, Shenzhen, Guangdong 518129 (CN)
(74) Representative: Körber, Martin Hans
(86) International application number: PCT/CN2023/104041
(87) International publication number: WO 2024/037215

(57) **Abstract**

This application pertains to the field of communication technologies, and provides a communication method and apparatus, to avoid a security risk during cross-domain access. In the method, when a second network element in a second trust domain requests, in a cross-domain manner, a first network element in a first trust domain to provide a corresponding service, the first network element may perform end-to-end verification, that is, trigger verification on whether the second network element is trusted, so that the first network element provides the service for the second network element only when it is determined that the second network element is trusted. In this way, a security risk during cross-domain access can be avoided.

## Description

This application claims priority to Chinese Patent Application No. 202210994211.6, filed with the China National Intellectual Property Administration on August 18, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, it is specified that different operator networks can access each other in the 3rd generation partnership project (3rd generation partnership project, 3GPP). A network element, for example, a v-network function (network function, NF) consumer (consumer), in a visited public land mobile network (visited public land mobile network, VPLMN), may communicate with a network element, for example, an hNF producer (producer), in a home public land mobile network (home public land mobile network, HPLMN). For example, the vNF consumer establishes a transport layer security (transport layer security, TLS) connection with a visited security edge protection proxy (visited security edge protection proxy, vSEPP), the vSEPP establishes a TLS connection with an hSEPP, and the hSEPP establishes a TLS connection with the hNF producer. In this way, the vNF consumer may communicate with the hNF producer in a hop-by-hop routing manner. For example, the hNF producer provides a service for the vNF consumer.

However, the hNF producer and the hNF producer do not directly communicate with each other, but communicate through the vSEPP and the hSEPP. As a result, a security risk exists during cross-domain access.

### SUMMARY

Embodiments of this application provide a communication method and apparatus, to avoid a security risk during cross-domain access.

To achieve the foregoing objective, this application uses the following technical solutions.

According to a first aspect, a communication method is provided. The method includes: When a first network element in a first trust domain needs to provide a service of the first trust domain for a second network element in a second trust domain, the first network element obtains, by triggering trust measurement on the second network element, result information corresponding to the trust measurement. In this way, when the first network element determines, based on the result information corresponding to the trust measurement, that the second network element is trusted, the first network element provides the service of the first trust domain for the second network element.

It can be learned from the method in the first aspect that, before the first network element in the first trust domain provides the corresponding service for the second network element in the second trust domain in a cross-domain manner, the first network element may perform end-to-end verification, that is, trigger verification on whether the second network element is trusted, so that the first network element provides the service for the second network element only when it is determined that the second network element is trusted. In this way, a security risk during cross-domain access can be avoided.

In a possible design solution, that the first network element obtains, by triggering trust measurement on the second network element, result information corresponding to the trust measurement includes: The first network element sends a measurement request to the second network element, to receive a measurement response from the second network element. The measurement request is used to request the second network element to trigger the trust measurement on the second network element, and the measurement response indicates the result information corresponding to the trust measurement. In other words, the first network element may directly indicate the second network element to trigger the trust measurement on the second network element, to improve communication efficiency. In addition, the result information corresponding to the trust measurement on the second network element may also be a measurement credential of the second network element, or a measurement token of the second network element. This is not limited.

Optionally, the first trust domain is a first operator network, the first network element is an authentication network element, the second trust domain is a second operator network, and the second network element is an access and mobility management network element. That the first network element sends a measurement request to the second network element includes: The authentication network element receives an authentication request from the access and mobility management network element, and sends the measurement request to the access and mobility management network element based on the authentication request. The authentication request is used to request the authentication network element to provide an authentication service for the access and mobility management network element, and the measurement request is used to request the access and mobility management network element to trigger the trust measurement on the access and mobility management network element.

Optionally, that the first network element provides the service for the second network element includes: The authentication network element sends an authentication response to the access and mobility management network element. The authentication response indicates an authentication service, and the measurement request is used to request the access and mobility management network element to trigger the trust measurement on the access and mobility management network element.

It can be learned that, when the first trust domain is the first operator network and the second trust domain is the second operator network, the trust measurement on the second network element triggered by the first network element may be reused in a registration scenario of a terminal. For example, the authentication network element may trigger the trust measurement on the access and mobility management network element, to ensure communication security in the registration scenario.

Further, the terminal belongs to the first operator network, and the authentication service indicates information needed by the terminal to register with the second operator network, to ensure that the terminal can register with the second operator network.

Further, the method according to the first aspect may further include: The authentication network element sends verification attestation information to the access and mobility management network element. The verification attestation information is used by the terminal to verify whether the authentication network element or a first verification entity associated with the authentication network element is trusted, the first verification entity is in the first operator network, the authentication network element or the first verification entity is used to verify whether a second verification entity is trusted, the second verification entity is used to perform the trust measurement on the access and mobility management network element, and the second verification entity is in the second operator network. It can be learned that a registration procedure is usually triggered by the terminal, for example, the terminal requests to register with the second operator network. Therefore, the verification attestation information may also be provided to the terminal, to implement bidirectional verification, and further ensure communication security.

Optionally, the first trust domain is a service domain, the second trust domain is a virtualization infrastructure domain, and the second network element is a virtual network function. That the first network element sends a measurement request to the second network element includes: The first network element receives a registration request from the virtual network function, and sends the measurement request to the virtual network function based on the registration request, where the registration request is used to request the first network element to provide a registration service for the virtual network function, and the measurement request is used to request the virtual network function to trigger the trust measurement on the virtual network function.

Optionally, that the first network element provides the service for the second network element includes: The first network element sends a registration response to the virtual network function, where the registration response indicates the authentication service.

It can be learned that, when the first trust domain is the service domain, and the second trust domain is the virtualization infrastructure domain, the trust measurement triggered by the first network element for the second network element may be reused in a registration scenario of the virtual network function. For example, the first network element may trigger the trust measurement on the virtual network function, to ensure communication security in the registration scenario.

Further, the registration service indicates that the first network element allows the virtual network function to be registered with the service domain, to ensure that the virtual network function can be successfully registered with the service domain.

In a possible design solution, that the first network element obtains, by triggering trust measurement on the second network element, result information corresponding to the trust measurement includes: The first network element sends a measurement request to a third network element in the second trust domain, to receive a measurement response from the third network element. The third network element is a network element associated with the second network element, the measurement request is used to request the third network element to trigger the trust measurement on the second network element, and the measurement response indicates the result information corresponding to the trust measurement. In other words, when the first network element may not be able to directly communicate with the second network element, the first network element may still trigger the trust measurement on the second network element by indicating the third network element in the second trust domain, to ensure that the trust measurement can still be effectively performed.

Optionally, the first trust domain is a first operator network, the first network element is a first session management network element, the second trust domain is a second operator network, the second network element is a second user plane network element, and the third network element is a second session management network element. That the first network element sends a measurement request to a second network element includes: The first session management network element receives a session establishment request from the second session management network element, and sends the measurement request to the second session management network element based on the session establishment request. The session establishment request is used to request the first session management network element to provide a session establishment service for the second user plane network element, and the measurement request is used to request the second session management network element to trigger the trust measurement on the second user plane network element.

Optionally, that the first network element provides the service for the second network element includes: The first session management network element sends a session establishment response to the second session management network element, where session establishment creation indicates the session establishment service.

It can be learned that, when the first trust domain is the first operator network and the second trust domain is the second operator network, the trust measurement triggered by the first network element for the second network element may be reused in a session establishment scenario. For example, the first session management network element may trigger the trust measurement on the second session management network element, to ensure communication security in the session scenario.

Further, the first user plane network element is a network element in the first operator network, and the session establishment service indicates that the second user plane network element needs to establish a session with the first user plane network element, to ensure that the session can be successfully established.

Further, the method according to the first aspect may further include: The first session management network element sends indication information to the first user plane network element. The indication information indicates the first user plane network element to verify whether data received by the first user plane network element is from the second user plane network element, to ensure that the first user plane network element can process only the data from the trusted second user plane network element. This ensures user plane communication security.

In a possible design solution, before the first network element determines, based on the result information corresponding to the trust measurement, that the second network element is trusted, the method according to the first aspect may further include: The first network element receives information of a second verification entity from the second network element, and determines, based on the information about the second verification entity, that the second verification entity is trusted. The second verification entity is a verification entity used to measure the second network element, the second verification entity is in the second trust domain, and there is no trust relationship between the first network element and the verification entity in the second trust domain. In other words, before determining whether the second network element is trusted, the first network element may further determine whether the second verification entity that performs the trust measurement on the second network element is trusted, to further ensure communication security.

Optionally, that the first network element determines, based on the information about the second verification entity, that the second verification entity is trusted includes: The first network element sends a verification request to a first verification entity in the first trust domain, where the verification request is used to request the first verification entity to verify, based on the information about the second verification entity, whether the second verification entity is trusted. For example, the verification request is used to request to subscribe to a first event, and the first event may be that the first verification entity needs to verify, based on the information about the second verification entity, whether the second verification entity is trusted. In this way, the first network element receives a verification response from the first verification entity. The verification response indicates that the second verification entity is trusted. It may be understood that, if the second verification entity cannot be trusted by the first network element, the first network element usually does not configure a profile related to the second verification entity, and therefore cannot directly verify whether the second verification entity is trusted. In this case, the first network element may further trigger the first verification entity trusted by the first network element to verify whether the second verification entity is trusted, to ensure communication security. Certainly, when the first network element is configured with the profile related to the second verification entity, the first network element may also directly verify whether the second verification entity is trusted. This is not limited.

Further, the information about the second verification entity includes at least one of the following: identity information of the second verification entity or attestation information of the second verification entity. The identity information of the second verification entity may include at least one of the following: an identifier of the second verification entity or a signature of the second verification entity. The attestation information of the second verification entity may include at least one of the following: deployment evidence of the second verification entity, a credential of an institution to which the second verification entity belongs, or subscription registration information about the second verification entity, to implement comprehensive verification on the second verification entity.

It may be understood that, because the information about the second verification entity may also be carried in the foregoing result information corresponding to the trust measurement, for example, the measurement credential of the second network element, it may also be understood that the first network element determines, based on the measurement credential of the second network element, that the second verification entity is trusted. Further, it may also be understood that the first verification entity determines, based on the measurement credential of the second network element, that the second verification entity is trusted.

In a possible design solution, before the first network element obtains, by triggering the trust measurement on the second network element, the result information corresponding to the trust measurement, the method according to the first aspect may further include: The first network element determines that there is no trust measurement record of the second network element; or the first network element determines that there is a trust measurement record of the second network element, but the trust measurement record is invalid. In other words, when the trust measurement is not performed on the second network element, or the trust measurement is performed on the second network element, but the trust measurement is invalid, the first network element triggers the trust measurement on the second network element; otherwise, the first network element may not trigger the trust measurement on the second network element, but may directly communicate with the second network element, to reduce the overheads.

Optionally, the first network element determines that there is no trust measurement record of the second network element includes: The first network element determines that at least one network element does not store the trust measurement record of the second network element. Alternatively, that the first network element determines that there is the trust measurement record of the second network element, but the trust measurement record is invalid includes: The first network element determines that at least one network element stores the trust measurement record of the second network element, but the trust measurement record is invalid. The at least one network element includes a first network element or a proxy function, where the proxy function is a relay for communication between the first network element and the second network element. In other words, the trust measurement record may be flexibly stored in the first network element or the proxy function. This is not limited.

In a possible design solution, that the first network element obtains, by triggering trust measurement on the second network element, result information corresponding to the trust measurement includes: The first network element sends a measurement request to a first verification entity in the first trust domain, to receive a measurement response from the first verification entity, where the measurement request is used to request the first verification entity to trigger the trust measurement on the second network element, and the measurement response indicates the result information corresponding to the trust measurement. In other words, when the second network element may not be trusted by the first network element currently, the first network element may trigger the trust measurement on the second network element through the first verification entity trusted by the first network element, to avoid direct communication with the second network element, and further ensure communication security.

Optionally, when the first network element in the first trust domain further needs to provide a service of the first trust domain for a network element in a third trust domain, the measurement request is used to request the first verification entity to trigger trust measurement on the second network element and the network element in the third trust domain, and the measurement response indicates result information corresponding to the trust measurement on the second network element and the network element in the third trust domain. In addition, that the first network element provides the service for the second network element includes: The first network element determines, based on result information corresponding to the trust measurement, that the second network element and the network element in the third trust domain are trusted, to provide services for the second network element and the network element in the third trust domain.

In a possible design solution, that the first network element determines, based on the result information corresponding to the trust measurement, that the second network element is trusted includes: The first network element determines, based on that at least one item in the result information corresponding to the trust measurement meets a preset condition, that the second network element is trusted, where at least one item in the result information meets the preset condition includes: An identifier representing the measurement credential matches a preconfigured identifier, an identifier of a measured network element matches an identifier of the second network element, or the result information indicates that the second network element is trusted, to implement comprehensive verification on the second network element.

According to a second aspect, a communication method is provided. The method includes: A first verification entity in a first trust domain receives a verification request from a first network element in the first trust domain. The verification request is used to request the first verification entity to verify, based on information of a second verification entity, whether the second verification entity is trusted, where the second verification entity is in a second trust domain, and there is no trust relationship between the first network element and a verification entity in the second trust domain. In this way, the first verification entity sends a verification response to the first network element based on the verification request. The verification response indicates that the second verification entity is trusted, or the verification response indicates that the second verification entity is untrusted.

In a possible design solution, the verification request is used to request to subscribe to a first event, and the first event is that the first verification entity needs to verify, based on the information about the second verification entity, whether the second verification entity is trusted.

Optionally, the information about the second verification entity includes at least one of the following: identity information of the second verification entity or attestation information of the second verification entity. The identity information of the second verification entity may include at least one of the following: an identifier of the second verification entity or a signature of the second verification entity. The attestation information about the second verification entity may include at least one of the following: deployment evidence of the second verification entity, a credential of an institution to which the second verification entity belongs, or subscription registration information of the second verification entity.

In addition, for technical effect of the communication method according to the second aspect, refer to technical effect of the communication method according to the first aspect. Details are not described herein.

According to a third aspect, a communication method is provided. The method includes: When a first network element in a first trust domain needs to provide a service of the first trust domain for a second network element in a second trust domain, a fourth network element in the second trust domain, receives a measurement request from the first network element, and sends a measurement response to the first network element based on the measurement request. The fourth network element is associated with the second network element, the measurement request indicates the fourth network element to trigger the trust measurement on the second network element, and the measurement response indicates whether the second network element is trusted. In this way, when the second network element is trusted, the fourth network element obtains the service provided by the first network element for the second network element.

In a possible design solution, the fourth network element and the second network element are a same network element.

Optionally, the first trust domain is a first operator network, the first network element is an authentication network element, the second trust domain is a second operator network, and the second network element is an access and mobility management network element. The method according to the third aspect further includes: The access and mobility management network element sends an authentication request to the authentication network element, where the authentication request is used to request the authentication network element to trigger an authentication service provided to the access and mobility management network element. That a fourth network element receives a measurement request from the first network element includes: The access and mobility management network element receives the measurement request returned by the authentication network element for the authentication request.

Optionally, that the fourth network element obtains the service provided by the first network element for the second network element includes: The access and mobility management network element receives an authentication response from the authentication network element, where the authentication response indicates the authentication service.

Optionally, that the access and mobility management network element sends an authentication request to the authentication network element includes: The access and mobility management network element receives a registration request from a terminal, where the terminal belongs to the first operator network, and the registration request is used by the terminal to request to register with the second operator network. In this way, the access and mobility management network element sends the authentication request to the authentication network element based on the registration request.

Further, the authentication service indicates information needed by the terminal to register with the second operator network.

Further, the method according to the third aspect may further include: The access and mobility management network element receives verification attestation information from the authentication network element, and sends the verification attestation information to the terminal. The verification attestation information is used by the terminal to verify whether the authentication network element or a first verification entity associated with the authentication network element is trusted, the first verification entity is in the first operator network, the authentication network element or the first verification entity is used to verify whether a second verification entity is trusted, the second verification entity is used to perform the trust measurement on the access and mobility management network element, and the second verification entity is in the second operator network.

Optionally, the first trust domain is a service domain, the second trust domain is a virtualization infrastructure domain, and the second network element is a virtual network function. The method according to the third aspect further includes: The virtual network function sends a registration request to a first network element, where the registration request is used to request the first network element to provide a registration service for the virtual network function. That a fourth network element receives a measurement request from the first network element includes: A virtual network function receives the measurement request returned by the first network element for the registration request.

Optionally, that the fourth network element obtains the service provided by the first network element for the second network element includes: The virtual network function receives a registration response from the first network element, where the authentication response indicates the registration service.

Further, the registration service indicates that the first network element allows the virtual network function to be registered with the service domain.

In a possible design solution, the fourth network element and the second network element are different network elements.

Optionally, the first trust domain is a first operator network, the first network element is a first session management network element, the second trust domain is a second operator network, the second network element is a second user plane network element, and the fourth network element is a second session management network element. The method according to the third aspect further includes: The second session management network element sends a session establishment request to the first session management network element, where the session establishment request is used to request the first session management network element to provide a session establishment service for the second user plane network element. That a fourth network element receives a measurement request from the first network element includes: A second session management network element receives the measurement request returned by the first session management network element for the session establishment request.

Optionally, that the fourth network element obtains the service provided by the first network element for the second network element includes: The second session management network element receives a session establishment response from the first session management network element, where the session establishment response indicates the session establishment service.

Further, the session establishment service indicates that the second user plane network element needs to establish a service session with a first user plane network element, and the first user plane network element is a network element in the first operator network.

Further, the method according to the third aspect may further include: The second session management network element sends indication information to the second user plane network element, where the indication information indicates that the second user plane network element needs to identify data, to indicate that the data is data sent by the second user plane network element.

Further, the method according to the third aspect may further include: The second session management network element receives a session establishment request from a terminal, and determines the second user plane network element based on the session establishment request. The terminal belongs to the first operator network, and the session establishment request is used by the terminal to request to establish a session. In this case, the second session management network element may preferentially select a user plane network element having a trust measurement record, so that the trust measurement may not be performed this time, to reduce overheads.

According to a fourth aspect, a communication apparatus is provided. The communication apparatus includes a module configured to perform the communication method according to the first aspect, for example, a transceiver module and a processing module. The transceiver module may be configured to perform a sending and receiving function of the communication apparatus, and the processing module may be configured to perform another function of the communication apparatus other than the sending and receiving function. In a possible scenario, when a first network element in a first trust domain needs to provide a service of the first trust domain for a second network element in a second trust domain, the processing module is configured to obtain, by triggering trust measurement on the second network element, result information corresponding to the trust measurement. The processing module is further configured to: when the first network element determines, based on the result information corresponding to the trust measurement, that the second network element is trusted, control the transceiver module to provide a service of the first trust domain for the second network element.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the communication method according to the first aspect.

It should be noted that the communication apparatus according to the fourth aspect may be a network device, may be a chip (system) or another component or assembly that may be disposed in a network device, or may be an apparatus including a network device. This is not limited in this application.

In addition, for technical effect of the communication apparatus according to the fourth aspect, refer to the technical effect of the communication method according to the first aspect. Details are not described herein.

According to a fifth aspect, a communication apparatus is provided. The communication apparatus includes a module configured to perform the communication method according to the second aspect, for example, a transceiver module and a processing module. The transceiver module may be configured to perform a sending and receiving function of the communication apparatus, and the processing module may be configured to perform another function of the communication apparatus other than the sending and receiving function. In a possible scenario, the transceiver module is configured to receive a verification request from a first network element in a first trust domain. The verification request is used to request the communication apparatus in the first trust domain to verify, based on information of a second verification entity, whether the second verification entity is trusted, where the second verification entity is in a second trust domain, and there is no trust relationship between the first network element and a verification entity in the second trust domain. In this way, the processing module is configured to control, based on the verification request, the transceiver module to send a verification response to the first network element. The verification response indicates that the second verification entity is trusted, or the verification response indicates that the second verification entity is untrusted.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the communication method according to the second aspect.

It should be noted that the communication apparatus according to the fifth aspect may be a network device, may be a chip (system) or another component or assembly that may be disposed in a network device, or may be an apparatus including a network device. This is not limited in this application.

In addition, for technical effect of the communication apparatus according to the fifth aspect, refer to the technical effect of the communication method according to the second aspect. Details are not described herein.

According to a sixth aspect, a communication apparatus is provided. The communication apparatus includes a module configured to perform the communication method according to the third aspect, for example, a transceiver module and a processing module. The transceiver module may be configured to perform a sending and receiving function of the communication apparatus, and the processing module may be configured to perform another function of the communication apparatus other than the sending and receiving function. In a possible scenario, the communication apparatus is a network element in a second trust domain. When a first network element in a first trust domain needs to provide a service of the first trust domain for a second network element in the second trust domain, the transceiver module is configured to receive a measurement request from the first network element, and the processing module is configured to control, based on the measurement request, the transceiver module to send a measurement response to the first network element. A fourth network element is associated with the second network element, the measurement request indicates the communication apparatus element to trigger the trust measurement on the second network element, and the measurement response indicates whether the second network element is trusted. In this way, when the second network element is trusted, the processing module is configured to obtain the service provided by the first network element for the second network element.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the communication method according to the third aspect.

It should be noted that the communication apparatus according to the sixth aspect may be a network device, may be a chip (system) or another component or assembly that may be disposed in a network device, or may be an apparatus including a network device. This is not limited in this application.

In addition, for technical effect of the communication apparatus in the sixth aspect, refer to the technical effect of the communication method in the third aspect. Details are not described herein.

According to a seventh aspect, a communication apparatus is provided. The communication apparatus includes a processor, and the processor is configured to perform the communication method according to any one of the possible implementations of the first aspect to the third aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the communication apparatus according to the seventh aspect may further include a memory. The memory and the processor may be integrated together, or may be disposed separately. The memory may be configured to store a computer program and/or data related to the communication method according to any one of the first aspect to the third aspect.

In this application, the communication apparatus according to the seventh aspect may be the terminal according to any one of the first aspect to the third aspect, or a chip (system) or another component or assembly that may be disposed in the terminal, or an apparatus including the terminal.

In addition, for technical effect of the communication apparatus according to the seventh aspect, refer to the technical effect of the communication method according to any one of the implementations of the first aspect to the third aspect. Details are not described herein.

According to an eighth aspect, a communication apparatus is provided. The communication apparatus includes a processor. The processor is coupled to a memory, and the processor is configured to execute a computer program stored in the memory, so that the communication apparatus performs the communication method according to any one of the possible implementations of the first aspect to the third aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be the terminal according to any one of the first aspect to the third aspect, or a chip (system) or another component or assembly that may be disposed in the terminal, or an apparatus including the terminal.

In addition, for technical effect of the communication apparatus according to the eighth aspect, refer to the technical effect of the communication method according to any one of the possible implementations of the first aspect to the third aspect. Details are not described herein.

According to a ninth aspect, a communication apparatus is provided, and includes a processor and a memory. The memory is configured to store a computer program, and when the processor executes the computer program, the communication apparatus is enabled to perform the communication method according to any one of the implementations of the first aspect to the third aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be the terminal according to any one of the first aspect to the third aspect, or a chip (system) or another component or assembly that may be disposed in the terminal, or an apparatus including the terminal.

In addition, for technical effect of the communication apparatus according to the ninth aspect, refer to the technical effect of the communication method according to any one of the implementations of the first aspect to the third aspect. Details are not described herein.

According to a tenth aspect, a communication apparatus is provided, and includes a processor. The processor is configured to: be coupled to a memory; and after reading a computer program in the memory, perform, based on the computer program, the communication method according to any one of the implementations of the first aspect to the third aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be the terminal according to any one of the first aspect to the third aspect, or a chip (system) or another component or assembly that may be disposed in the terminal, or an apparatus including the terminal.

In addition, for technical effect of the communication apparatus according to the tenth aspect, refer to the technical effect of the communication method according to any one of the implementations of the first aspect to the third aspect. Details are not described herein.

According to an eleventh aspect, a communication system is provided. The communication system includes one or more terminals according to any one of the first aspect to the third aspect.

According to a twelfth aspect, a computer-readable storage medium is provided, and includes a computer program or instructions. When the computer program or the instructions are run on a computer, the computer is enabled to perform the communication method according to any one of the possible implementations of the first aspect to the third aspect.

According to a thirteenth aspect, a computer program product is provided, and includes a computer program or instructions. When the computer program or the instructions are run on a computer, the computer is enabled to perform the communication method according to any one of the possible implementations of the first aspect to the third aspect.

### BRIEF DESCRIPTION OF DRAWINGS

FIG. 1 is a diagram of a non-roaming architecture of a 5G system;
FIG. 2 is a diagram of a roaming architecture of a 5G system;
FIG. 3 is a schematic flowchart of communication between a network element in a VPLMN and a network element in an HPLMN in a roaming architecture;
FIG. 4 is a schematic flowchart of remote attestation;
FIG. 5 is a diagram of an architecture of NFV;
FIG. 6 is a diagram of an architecture of NFV based on remote attestation;
FIG. 7 is a schematic flowchart of NFV based on remote attestation;
FIG. 8 is a diagram of an architecture of a communication system according to an embodiment of this application;
FIG. 9 is a schematic flowchart 1 of a communication method according to an embodiment of this application;
FIG. 10 is a schematic flowchart 2 of a communication method according to an embodiment of this application;
FIG. 11 is a schematic flowchart 3 of a communication method according to an embodiment of this application;
FIG. 12A and FIG. 12B are a schematic flowchart 4 of a communication method according to an embodiment of this application;
FIG. 13 is a schematic flowchart 5 of a communication method according to an embodiment of this application;
FIG. 14 is a schematic flowchart 6 of a communication method according to an embodiment of this application;
FIG. 15 is a diagram 1 of a structure of a communication apparatus according to an embodiment of this application; and
FIG. 16 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (which is referred to as a 5G system (5G system, 5GS) for short)

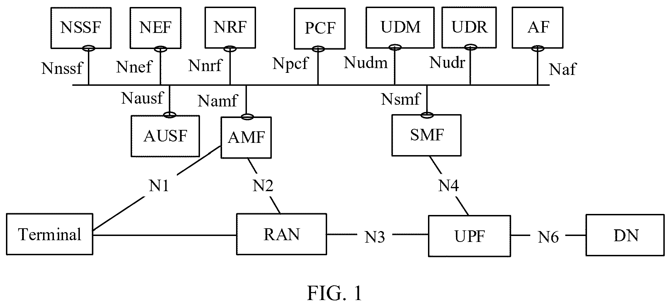

FIG. 1 is a diagram of a non-roaming architecture of the 5GS. As shown in FIG. 1, the 5GS includes an access network (access network, AN) and a core network (core network, CN), and may further include a terminal.

The terminal may be a terminal having a sending and receiving function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) that has a terminal function, or the like. Alternatively, the terminal in this application may be a vehicle-mounted module, a vehicle-mounted assembly, a vehicle-mounted component, a vehicle-mounted chip, or a vehicle-mounted unit that is built in a vehicle as one or more components or units.

The foregoing AN is for implementing an access-related function, may provide a network access function for an authorized user in a specific area, and can determine transmission links with different quality based on a user level, a service requirement, and the like, to transmit user data. The AN forwards a control signal and the user data between the terminal and the CN. The AN may include an access network device, or may be referred to as a radio access network (radio access network, RAN) device. The CN is mainly responsible for maintaining subscription data of a mobile network, and provides functions such as session management, mobility management, policy management, and security authentication for the terminal. The CN mainly includes the following functions: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), unified data management (unified data management, UDM), unified data repository (unified data repository, UDR), and an application function (application function, AF).

As shown in FIG. 1, UE accesses the 5G network via the RAN device, and the UE communicates with the AMF through an N1 interface (N1 for short). The RAN communicates with the AMF through an N2 interface (N2 for short). The RAN communicates with the UPF through an N3 interface (N3 for short). The SMF communicates with the UPF through an N4 interface (N4 for short), and the UPF accesses a data network (data network, DN) through an N6 interface (N6 for short). In addition, control plane functions such as the AUSF, the AMF, the SMF, the NSSF, the NEF, the NRF, the PCF, the UDM, the UDR, and the AF shown in FIG. 1 interact with each other through service-oriented interfaces. For example, a service-oriented interface exhibited by the AUSF is Nausf, a service-oriented interface exhibited by the AMF is Namf, a service-oriented interface exhibited by the SMF is Nsmf, a service-oriented interface exhibited by the NSSF is Nnssf, a service-oriented interface exhibited by the NEF is Nnef, a service-oriented interface exhibited by the NRF is Nnrf, a service-oriented interface exhibited by the PCF is Npcf, a service-oriented interface exhibited by the UDM is Nudm, a service-oriented interface exhibited by the UDR is Nudr, and a service-oriented interface exhibited by the AF is Naf.

The RAN device may be a device that provides access for the terminal. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network. Alternatively, the RAN device may include an access point (access point, AP) in a wireless fidelity (wireless fidelity, Wi-Fi) system, a wireless relay node, a wireless backhaul node, macro base stations in various forms, a micro base station (which is also referred to as a small cell), a relay station, an access point, a wearable device, a vehicle-mounted device, or the like.

The UPF is mainly responsible for user data processing (forwarding, receiving, charging, and the like). For example, the UPF may receive user data from a data network (data network, DN), and forward the user data to the terminal via the access network device. The UPF may alternatively receive the user data from the terminal via the access network device, and forward the user data to the DN. The DN is an operator network that provides a data transmission service for a user, for example, an internet protocol (internet protocol, IP) multi-media service (IP multi-media service, IMS), and an internet (internet). The DN may be an external network of an operator, or may be a network controlled by an operator, and is configured to provide a service for the terminal device. In a protocol data unit (protocol data unit, PDU) session, a UPF that is directly connected to a DN through N6 is also referred to a protocol data unit session anchor (protocol data unit Session Anchor, PSA).

The AUSF is mainly used for security authentication on the terminal.

The AMF is mainly for mobility management in the mobile network, for example, user position update, registration of a user to a network, and user switching.

The SMF is mainly for session management in the mobile network, for example, session establishment, modification, and release. A specific function is, for example, allocating an internet protocol (internet protocol, IP) address to the user, or selecting a UPF that provides a data packet forwarding function.

The PCF is mainly for providing a unified policy framework to control network behavior, and providing a policy rule for a control layer network function, and is also responsible for obtaining policy-decision-related subscription information of a user. The PCF may be for providing a policy, for example, a quality of service (quality of service, QoS) policy or a slice selection policy to the AMF and the SMF.

The NSSF is mainly for selecting a network slice for the terminal.

The NEF is mainly for supporting capability and event exposure.

The UDM is mainly for storing user data, for example, subscription data and authentication/authorization data.

The UDR is mainly for storing structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

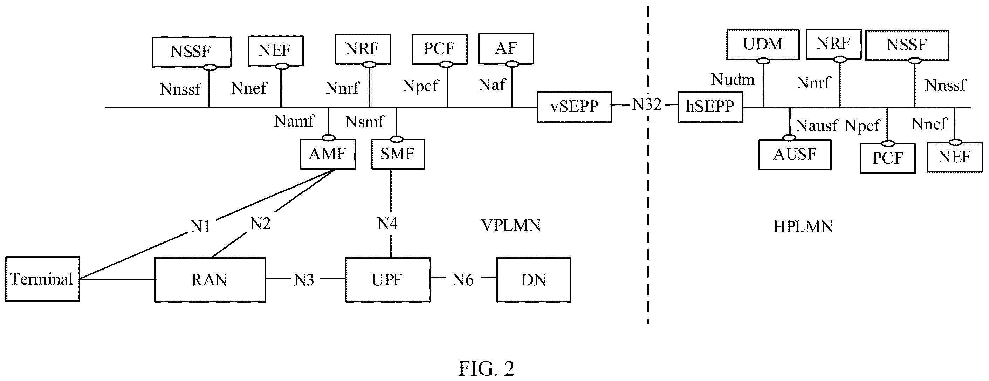

FIG. 2 is a diagram of a roaming architecture of a 5GS. The 5G network includes an HPLMN and a VPLMN. The HPLMN is a home network of UE, the VPLMN is a visited network of the UE, and the VPLMN and the HPLMN communicate with each other through vSEPP and hSEPP. In the scenario shown in FIG. 2, a service may be deployed in the HPLMN, that is, a DN is in the HPLMN (not shown in the figure), and a terminal establishes a session of a home route to communicate with the DN. Optionally, a service may alternatively be in the VPLMN, that is, a DN is in the VPLMN, and a terminal establishes a local session to communicate with the DN in the VPLMN. Optionally, in a scenario of the session of the home route, an intermediate UPF may be inserted into the session, so that the terminal can access the service in the data network in the VPLMN. For a specific architecture, refer to TS (technical specification, technical specification) 23.548.

As shown in FIG. 2, in the VPLMN, UE accesses a 5G network through a RAN device, and the UE communicates with an AMF through an N1 interface (N1 for short). The RAN device communicates with the AMF through an N2 interface (N2 for short). The RAN device communicates with a UPF through an N3 interface (N3 for short). An SMF communicates with the UPF through an N4 interface (N4 for short). In the HPLMN, a UPF accesses the DN through an N6 interface (N6 for short); and the UPF communicates with an SMF through an N4 interface (N4 for short). In addition, the UPF in the VPLMN communicates with the UPF in the HPLMN through an N9 interface (N9 for short). In addition, control plane functions such as an NSSF, an NEF, the AMF, the SMF, an NRF, or a PCF in the VPLMN shown in FIG. 2 interact with each other through service-oriented interfaces. For example, a service-based interface exhibited by the AMF is Namf, a service-based interface exhibited by the SMF is Nsmf, a service-based interface exhibited by the NSSF is Nnssf, a service-based interface exhibited by the NEF is Nnef, a service-based interface exhibited by the NRF is Nnrf, and a service-based interface exhibited by the PCF is Npcf. Control plane functions such as a UDM, an AUSF, a PCF, an NRF, an NSSF, an AF, or an NEF in the HPLMN shown in FIG. 2 also interact with each other through service-oriented interfaces. For example, a service-based interface exhibited by the AUSF is Nausf, a service-based interface exhibited by the UDM is Nudm, and a service-based interface exhibited by the AF is Naf. "Nxx" between two network elements shown in FIG. 2 represents an interface between the two network elements. Details are not described one by one.

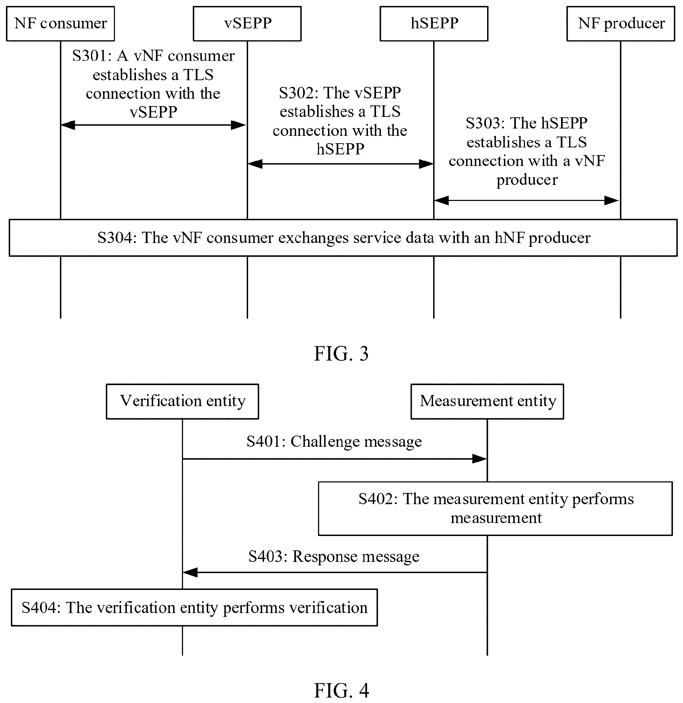

As shown in FIG. 3, in a roaming architecture, a network element in a VPLMN communicates with a network element in an HPLMN, and a specific procedure is as follows:
S301: A vNF consumer (consumer) establishes a transport layer security (transport layer security, TLS) connection with a v-security edge protection proxy (security edge protection proxy, SEPP).

The vNF consumer is functional network elements, in the VPLMN, such as a V-UPF, a V-AMF, or a V-SMF. The vSEPP refers to the SEPP corresponding to the VPLMN. The vNF consumer and the vSEPP may verify a trusted credential (namely, a certificate) of each other, and establish a TLS connection between the vNF consumer and the vSEPP when the verification succeeds.

S302: The vSEPP establishes a TLS connection with an hSEPP.

The hSEPP refers to the SEPP corresponding to the HPLMN. The vSEPP and hSEPP may verify each other's trusted credentials and establish the TLS connection between the vSEPP and hSEPP when the verification succeeds.

S303: The hSEPP establishes a TLS connection with an hNF producer (producer).

The hNF producer is functional network elements, in the HPLMN, such as an H-UPF, an H-AMF, or an H-SMF. The hNF producer and the hSEPP may verify trusted credentials of each other, and establish the TLS connection between the hNF producer and the hSEPP when the verification succeeds.

S304: The vNF consumer exchanges service data with the hNF producer.

In the manner of establishing the TLS connection hop by hop in S301 to S304, a routing path between the vNF consumer and the hNF producer is established, to exchange service data of each other in a routing manner.

It can be learned that the foregoing manner of establishing the TLS connection hop by hop may have the following technical problems:
The connection between the vNF consumer and the hNF producer is not end-to-end direct communication. For example, the vNF consumer and the hNF producer do not directly perform end-to-end verification. Instead, the vNF consumer and the hNF producer establish the TLS connection hop by hop by verifying a credential and cooperating with the vSEPP and hSEPP. As a result, any malicious network element can hold a valid credential for communication through theft. This poses security risks.

### 2. Remote attestation (remote attestation) technology

In recent years, as quantities of embedded systems, cyber-physical systems, and internet-of-things devices significantly increase, these devices have been included in many scenarios, in daily life, such as households, offices, and factories. These systems or devices can be connected to the internet to provide network a service for a user, and expand an attack surface of an attacker. For example, malicious software of the attacker may affect security of the systems or devices or steal private data when drivers of the systems or devices are upgraded. Alternatively, malicious software of the attacker may turn these systems or devices into "botnet" devices, that is, malicious manipulation becomes a source of a distributed denial-of-service (distributed denial-of-service, DDoS) attack. However, due to factors such as costs, sizes, and power, security is usually not a priority for the systems or devices, the systems or devices are difficult to implement self-protection against attacks by the systems or devices.

In this case, remote attestation can be used to verify the security of the systems or devices to determine whether the systems or devices are attacked. Remote attestation includes a measurement entity (attester) and a verification entity (verifier). The measurement entity and the verification entity may be separated. For example, the measurement entity may be deployed on a side of these systems or devices, and the verification entity may be deployed remotely. The verification entity can request the measurement entity to measure these systems or devices to obtain evidence (evidence). The verification entity can verify security of these systems or devices based on the evidence. The following provides detailed descriptions.

FIG. 4 is a schematic flowchart of remote attestation. As shown in FIG. 4, a procedure of the remote attestation includes the following steps.

S401: A verification entity sends a challenge message to a measurement entity. Correspondingly, the measurement entity accepts the challenge message from a challenger.

The challenge message may carry request information. The request information is used to request the measurement entity to perform measurement, for example, request the measurement entity to measure the foregoing system or device. The challenge message may further carry a random number uniquely corresponding to the current measurement. The random number is used to for the measurement entity to perform the measurement.

S402: The measurement entity performs measurement.

The measurement entity may perform measurement from the foregoing system or device based on the challenge message to obtain evidence required for measurement, for example, obtain programs or files inside systems or devices, and calculate hash values corresponding to the programs or files based on a random number.

S403: The measurement entity sends a response message to the verification entity. Correspondingly, the verification entity receives the response message from the measurement entity.

The response message may indicate that the measurement is completed. The response message may carry the foregoing hash values.

S404: The verification entity performs verification.

The verification entity may compare the hash values in the response message with preset hash values of the systems or devices. If the hash values in the response message are the same as preset hash values of the systems or devices, it indicates that the programs or software of the systems or devices has not been tampered with, and therefore the verification entity may determine that the systems or devices are trusted devices, that is, determine that the verification succeeds. If the hash values in the response message are different from the preset hash values of the system or device, it indicates that the program or software of the system or device may be tampered with, so the verification entity may determine that the systems or devices are untrusted devices, that is, determine that the verification fails.

### 3. Network Function Virtualization (network function virtualization, NFV)

NFV separates a network function of a conventional communication device from a physical device for the network function, and then runs software on commercial off-the-shelf (commercial off-the-shelf, COTS). In other words, NFV is a virtual entity (Virtual Instance) implemented by using a virtualization technology in the internet technology (internet technology, IT), and deploys a communication technology (communication technology, CT) service of the conventional communication device on the virtual entity. The virtual entity may be a virtual machine (virtual machine, VM), a container (container), or any other possible virtualized functional entity. This is not specifically limited herein.

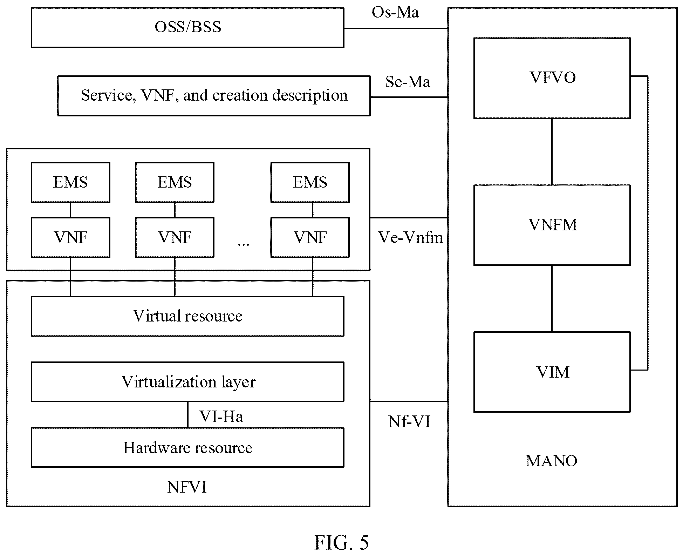

FIG. 5 is a diagram of an architecture of NFV. As shown in FIG. 5, NFV includes: a network function virtualization infrastructure (network function virtualization infrastructure, NFVI), a virtual network function (virtual network function, VNF), an element management system (element management system, EMS), and management and orchestration (management and orchestration, MANO).

The NFVI may be used to provide a virtual resource for the VNF. The NFVI includes hardware resources, for example, hardware devices such as network, computing, and storage devices. In addition, the NFVI further includes a software resource, for example, a virtualization layer (virtualization layer). The virtualization layer may include a virtual machine management program (hypervisor) or a container management system. The virtualization layer may virtualize a hardware resource into a virtual resource, for example, a virtual network, computing, or storage function, for use by the VNF.

The EMS usually one-to-one corresponds to the VNF, and is used to configure and manage a function of the VNF.

The VNF is a virtualized NF. The VNF may be used to provide a network service, for example, data forwarding, file sharing, a directory service, and IP configuration. A form of the VNF may be application software, that is, may be a piece of application software that provides the network service. The VNF can be deployed on a VM or container. The VM is used as an example, one VNF may be deployed on one or more VMs, that is, the one or more VMs may jointly provide the VNF. Because an operator network may not sense the VNF, the VNF may also be understood as an NF in the operator network. In this case, if the VNF provide different network services, forms of the NF may also be different. For example, if the VNF provides a data transmission service, the NF may be a UPF network element; if the VNF provides a mobility management service, the NF may be an AMF network element; if the VNF provides a session management service, the NF may be an SMF network element; and if the VNF provides a policy management service, the NF may be a PCF network element, and by analogy. In this embodiment of this application, the VNF may have an independent identifier (identifier, ID), for example, the identifier of the VNF directly identifies the VNF. Alternatively, the VNF may not have an independent identifier, and the VNF may be indirectly identified by another identifier related to the VNF. For example, an identifier of the one or more VMs may indirectly identify a VNF provided by the one or more VMs, or an identifier of the NF may indirectly identify a corresponding VNF. It may be understood that because a service may not sense a VNF, for the service, the VNF is an NF, or the VNF may be understood as an NF.

The MANO may provide a framework for managing the NFVI and the VNF. For example, the MANO may include a network function virtualization orchestrator (network function virtualization orchestrator, NFVO), a virtualized infrastructure manager (virtualized infrastructure manager, VIM), and a virtual network function manager (network function virtualization manager, VNFM).

The NFVO is used to deploy and manage a network service (network service) and coordinate VNF deployment and management based on the network service. The NFVO can interconnect with an operation support system (operation support system, OSS) or a service support system (business support system, BSS), to obtain service descriptions of the network service. The NFVO can deploy and manage a corresponding network service based on the service descriptions, for example, creating a network service and managing a lifecycle of the network service. The NFVO may coordinate a VIM and a VNFM to deploy or manage a corresponding VNF based on the network service.

The VNFM is used to deploy or manage a corresponding VNF. For example, the VNFM may obtain a virtual network function descriptor (virtual network function descriptor, VNFD) from the NFVO, to add a VNF, delete a VNF, search for a VNF, or manage a VNF based on the VNFD, for example, monitor and adjust a status of the VNF.

The VIM is used to control the NFVI to provide a corresponding virtual resource for the VNF. For example, the VIM may control, based on scheduling by the NFVO, the NFVI to provide a corresponding virtual resource for VNF deployment or management. The VIM may be a cloud platform, for example, an open-source cloud platform, for example, OpenStack, or a commercial cloud platform, for example, VMWare.

### 4. Remote attestation-based VNF security solution

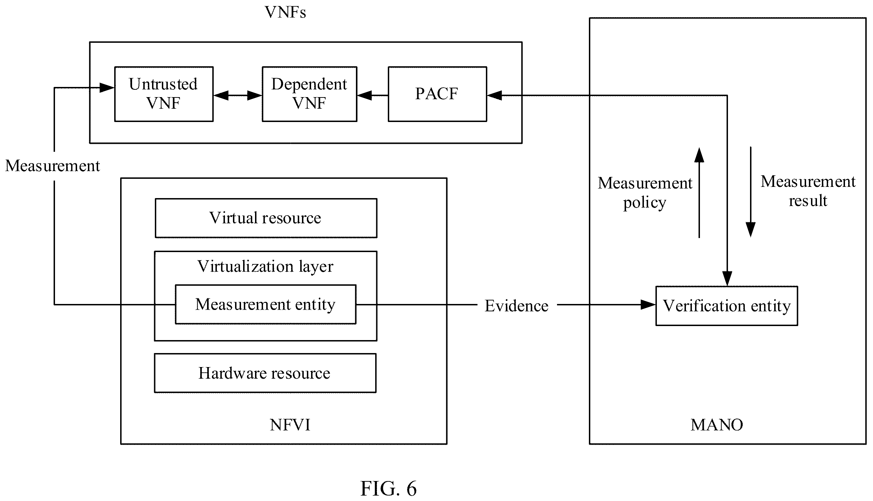

FIG. 6 is a diagram of an architecture of NFV based on the remote attestation. As shown in FIG. 6, instances of VNFs in a network defined in the 3GPP are various NFs, and the NFs may also be considered to be deployed in a network defined in the 3GPP, that is, a service domain. However, at the NFV architecture layer, VNFs may be considered to be deployed in an NFV domain. A verification entity can be deployed in the NFV domain, for example, the MANO. A measurement entity may also be deployed in the NFV domain, for example, a virtualization layer of the NFVI. In addition, since NFV is usually a service-based architecture (service-based architecture, SBA) architecture, for example, network elements or functions within NFV may communicate based on the 3rd generation partnership project (3rd generation partnership project, 3GPP) protocol, while the measurement entity and the verification entity each are usually not the SBA architecture, for example, the measurement entity and the verification entity communicate based on the European Telecommunications Standards Institute (European telecommunications standards institute, ETSI) protocol, a profile and attestation check function (profile and attestation check function, PACF) may also be deployed between the VNF and the verification entity, to implement communication between the VNF and the verification entity through protocol conversion.

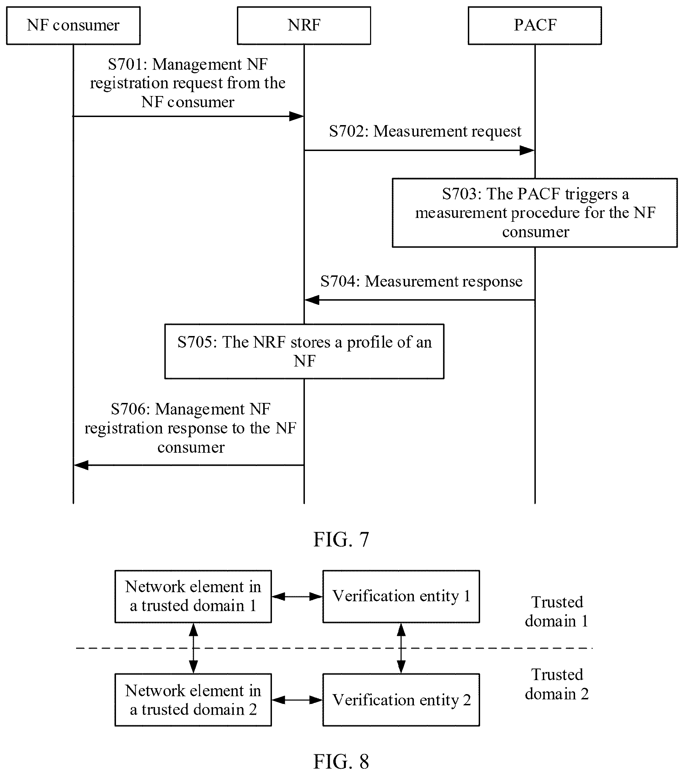

On this basis, a cross-domain (service domain-NFV domain) implementation procedure of the remote attestation-based VNF security solution is roughly defined in the 3GPP-service and architecture aspects 3 (service and architecture aspects 3) #105e-213897. For details, refer to FIG. 7.

S701: An NF consumer sends a management NF registration request (Nnrf_NFManagement_NFRegister Request) message to a network repository function (network repository function, NRF). Correspondingly, the NRF receives the management NF registration request from the NF consumer.

The NF consumer can also be considered as a VNF, for example, an untrusted (untrusted) VNF. The management NF registration request may carry an NF profile (NF profile), and the file is used for NF registration management, for example, includes an identifier of the NF consumer.

S702: The NRF sends a measurement request (Attestation_request) message to a PACF. Correspondingly, the PACF receives the measurement request from the NRF.

The measurement request is used to request to measure the NF consumer, and may include an NF profile signed by the NRF.

S703: The PACF triggers a measurement procedure for the NF consumer.

The PACF verifies a signature of the NF profile. If the verification succeeds, the PACF uses an identifier of the NF consumer to trigger the measurement procedure. For example, the PACF may send a measurement policy and a description of a measured network element, for example, an NF consumer, to a verification entity. The verification entity may request the measurement entity to measure various data of the NF consumer based on the measurement policy and the descriptions of the NF consumer to obtain corresponding evidence. The verification entity can verify the evidence to obtain the measurement result (attestation result) and send the measurement result to the PACF.

S704: The PACF sends a measurement response (Attestation_response) message to the NRF. Correspondingly, the NRF receives the measurement response from the PACF.

The measurement response may be used to respond to the measurement request, for example, including the measurement result of the NF consumer. It may be understood that the measurement result obtained by the PACF from the verification entity is a measurement result supported in the ETSI protocol. The PACF may convert a measurement result in the ETSI protocol into a measurement result supported in the 3GPP protocol, and then add the measurement result supported in the 3GPP protocol to the measurement response.

S705: The NRF stores the profile of an NF.

If the measurement result indicates that the authentication succeeds, the NRF determines that the NF consumer is trusted, marks the NF consumer as available, and stores the profile of the NF for the NF consumer. However, if the measurement result indicates that the authentication fails, the NRF determines that the NF consumer is untrusted and triggers a recovery process to handle the untrusted NF consumer.

S706: The NRF sends a management NF registration response (Nnrf_NFManagement_NFRegister Response) message to the NF consumer. Correspondingly, the NF consumer receives the management NF registration response from the NRF.

If the NRF determines that the NF consumer is trusted, the NRF may send the management NF registration response to the NF consumer, to indicate that the NRF has acknowledged registration of the NF consumer. In addition, S706 is an optional step. For example, when the NF consumer is untrusted, S706 may not be performed.

It can be learned that the cross-domain implementation procedure of the remote attestation-based VNF security solution may have the following problems:
(1) The foregoing cross-domain implementation procedure is mainly applied to an NRF registration procedure. To be specific, remote attestation is performed on the network element only when the network element is registered, to determine whether the network element is trusted when the network element is registered, but whether the network element is still trusted in another case (for example, when a service is initiated or a service is switched) cannot be determined. Therefore, a security risk exists.
(2) The foregoing cross-domain implementation procedure is implemented based on a fact that a network element in a service domain trusts a verification entity in an NFV domain by default. However, the network element in the service domain cannot learn whether the verification entity is actually trusted, causing a security risk in the procedure.
(3) The NF consumer cannot directly verify the measurement result of the verification entity. As a result, each verification needs to be completed through the PACF. On this basis, if a mode of verification through PACF is increased, for example, being extended to dynamically trigger in a plurality of service procedures, it may lead to excessive load on the PACF, and a PACF single point of failure may occur.

In conclusion, for the foregoing technical problem, embodiments of this application provide the following technical solutions, to avoid a security risk in cross-domain communication.

The following describes technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, assemblies, modules, and the like. It should be appreciated and understood that, each system may include another device, assembly, module, and the like, and/or may not include all devices, assemblies, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 8 is first used as an example to describe in detail a communication system to which embodiments of this application are applicable. For example, FIG. 8 is a diagram of an architecture of the communication system to which a communication method according to embodiments of this application is applicable.

As shown in FIG. 8, the communication system mainly includes network elements in different trust domains, and may be specifically a network element in a trust domain 1 and a network element in a trust domain 2, a verification entity 1, and a verification entity 2.

Trust domains may be classified in a plurality of manners. In a possible manner, the trust domains may be classified based on an operator, and different operator networks, namely, different PLMNs, may be classified into different trust domains. For example, the trust domain 1 is a PLMN 1, and the trust domain 2 is a PLMN 2. In another possible manner, the trust domains may be classified based on a network function, for example, a service domain and an NFV domain in a core network virtualization infrastructure, the trust domain 1 is the NFV domain, and the trust domain 2 is the service domain. Network elements in a same trust domain use unified management and authentication technologies, so that different network elements in the trust domain can consider each other trusted by default, thereby establishing a service connection. However, for network elements from different trust domains (network elements across trust domains), these network elements usually cannot directly determine whether each other is trusted, and an additional step is required to establish a trust relationship between the network elements to obtain a service provided by each other. For details, refer to the following descriptions. Details are not described.

The network element in the trust domain 1 may include an NF consumer. For example, the trust domain 1 is the PLMN 1, and the NF consumer may include any one of the following: an AMF 1, a UPF 1, an SMF 1, or the like. The trust domain 1 is the NFV domain, and the NF consumer may be a VNF. The trust domain 1 may further include another network element/device, for example, UE and a proxy function (proxy function) that may also be understood as the foregoing SEPP. This is not limited.

The network element in the trust domain 2 may include an NF producer. For example, the trust domain 1 is the PLMN 2, and the NF consumer may include any one of the following: an AUSF 2, an SMF 2, a UPF 2, or the like. The trust domain 2 is the service domain, and the NF consumer may be an NF. The trust domain 2 may further include another network element/device, for example, a proxy function that may also be understood as the foregoing SEPP. This is not limited.

The verification entity 1 may be deployed in the trust domain 1, and may be a network element (for example, a cloud management/network management system) in an NFVI, a verification function of a network element (for example, a verification function of a cloud management/network management system) in the NFVI, a network element that is in an operator network (for example, the PLMN 1) and that is configured to provide a verification function, or a verification function of a network element in an operator network (for example, the PLMN 1).

The verification entity 2 may be deployed in the trust domain 2, and may be a network element (for example, a cloud management/network management system) in the NFVI, a verification function of a network element (for example, a verification function of a cloud management/network management system) in the NFVI, an OSS/a BSS, a verification function in the OSS/BSS, a network element that is in an operator network (for example, the PLMN 2) and that is configured to provide a verification function, or a verification function of a network element in an operator network (for example, the PLMN 2).

It should be noted that the verification entity 1 is a network element in the NFVI or a verification function of the network element in the NFVI, and the verification entity 2 is also a network element in the NFVI or a verification function of the network element in the NFVI. In this case, the verification entity 1 and the verification entity 2 are different network elements or functions. Alternatively, the verification entity 1 is a network element in the NFVI or a verification function of the network element in the NFVI, and the verification entity 2 is an OSS/a BSS or a verification function in the OSS/BSS. In this case, it may be considered that there is a hierarchical relationship between the verification entity 1 and the verification entity 2. For example, the verification entity 2 may be configured to manage the verification entity 1, and the verification entity 2 may verify whether the verification entity 1 is trusted, but the verification entity 1 may not be able to determine whether the verification entity 2 is trusted.

Both the verification entity 1 and the verification entity 2 may belong to a trusted third party, that is, may be deployed by the trusted third party. On this basis, in one case, the verification entity 1 is a verification entity trusted by network elements in all trust domains (including the trust domain 1 and the trust domain 2). For example, the trusted third party configures the verification entity 1 for all the trust domains. For example, a certificate of the verification entity 1 is preconfigured in operating systems of network elements in all the trust domains. In this case, a measurement result of the verification entity 1 may be directly verified by the network elements in all the trust domains, and the verification entity 2 does not need to perform further verification. In another case, the verification entity 1 is a verification entity trusted by the network element in the trust domain 1, but the verification entity 1 is not directly trusted by a network element in another trust domain, for example, a trust domain 2. For example, the trusted third party configures the verification entity 1 for the trust domain 1. For example, a certificate of the verification entity 1 is preconfigured in an operating system of the network element in the trust domain 1, but the certificate of the verification entity 1 is not configured in an operating system of the network element in the trust domain 2. In this case, a measurement result of the verification entity 1 cannot be directly verified by the network element in the trust domain 2. In this case, the network element in the trust domain 2 may request the verification entity 2 that can be trusted by the network element to verify the verification entity 1, to determine whether the verification entity 1 is trusted and whether the measurement result of the verification entity 1 is trusted.

It should be further noted that the trust domain may be a concept defined for a network element. For example, if there is a trust relationship between two network elements by default, it may be considered that the two network elements are in a same trust domain. However, the network element may be a concept at a service level, and the verification entity 1 and the verification entity 2 are concepts at a security level. Therefore, the verification entity 1 and the verification entity 2 may not be understood as network elements in a conventional sense, and a concept of a trust domain may not be applied to the verification entity 1 and the verification entity 2. That is, although there may be a trust relationship between the verification entity 1 and the verification entity 2, for example, a hierarchical management relationship, the verification entity 1 and the verification entity 2 may be still in different trust domains.

In this embodiment of this application, a network element (for example, an NF consumer or a network element other than an NF consumer) in the trust domain 1 may request, in a cross-domain manner, a network element (for example, an NF producer or a network element other than an NF producer) in the trust domain 2 to trigger the NF producer to provide a service needed by the NF consumer. The network element in the trust domain 2 may respond to a request of the network element in the trust domain 1, to trigger verification on whether the NF consumer is trusted. Alternatively, the network element in the trust domain 2 may trigger, by the network element, the NF producer to provide a service needed by the NF consumer, to trigger verification on whether the NF consumer is trusted. For example, the network element in the trust domain 2 requests the network element in the trust domain 1 to provide a measurement result indicating whether the NF consumer is trusted. In this way, the network element in the trust domain 1 may trigger, based on a request of the network element in the trust domain 2, the verification entity 1 to perform the trust measurement on the NF consumer, to feed back a measurement token (token) of the NF consumer to the network element in the trust domain 1. In this case, if the verification entity 1 is a verification entity trusted by the network elements in all the trust domains, the network element in the trust domain 1 may verify the measurement token of the NF consumer, to determine whether the NF consumer is trusted. If the verification entity 1 is a verification entity trusted by the network element in the trust domain 1, and the verification entity 1 is untrusted by a network element in another trust domain, the network element in the trust domain 2 may request the verification entity 2 trusted by the network element in the trust domain 2 to verify the verification entity 1, to determine, based on the measurement token of the NF consumer, whether the NF consumer is trusted when it is determined that the verification entity 1 is trusted. If the network element in the trust domain 2 determines that the NF consumer is trusted, the network element in the trust domain 2 responds to the request of the network element in the trust domain 1, and triggers the NF consumer to provide the service needed by the NF producer; or if the network element in the trust domain 2 determines that the NF consumer is untrusted, the network element in the trust domain 2 may refuse to trigger the NF consumer to provide the service needed by the NF producer.

It may be understood that, in this embodiment of this application, different PLMNs may be distinguished through numbers such as "1", "2", and "3", for example, the PLMN 1 and the PLMN 2, and by analogy. For one UE that belongs to the PLMN 1, for example, UE 1, the PLMN 1 is a home network of the UE 1, and may also be referred to as an HPLMN of the UE 1. If the UE 1 moves to the PLMN 2, the PLMN 2 is a visited network of the UE, and may also be referred to as a VPLMN of the UE 1. Similarly, for one UE that belongs to the PLMN 2, for example, UE 2, the PLMN 2 is a home network of the UE 2, and may also be referred to as an HPLMN of the UE 2. If the UE 2 moves to the PLMN 1, the PLMN 1 is a visited network of the UE, and may also be referred to as a VPLMN of the UE 2. In this embodiment of this application, network elements in different PLMNs may be distinguished through numbers such as "1", "2", and "3". For example, network elements in the PLMN 1 may be an AMF 1, a UPF 1, an SMF 1, an AUSF 1, and the like, and network elements in the PLMN 2 may be an AMF 2, a UPF 2, an SMF 2, an AUSF 2, and by analogy.

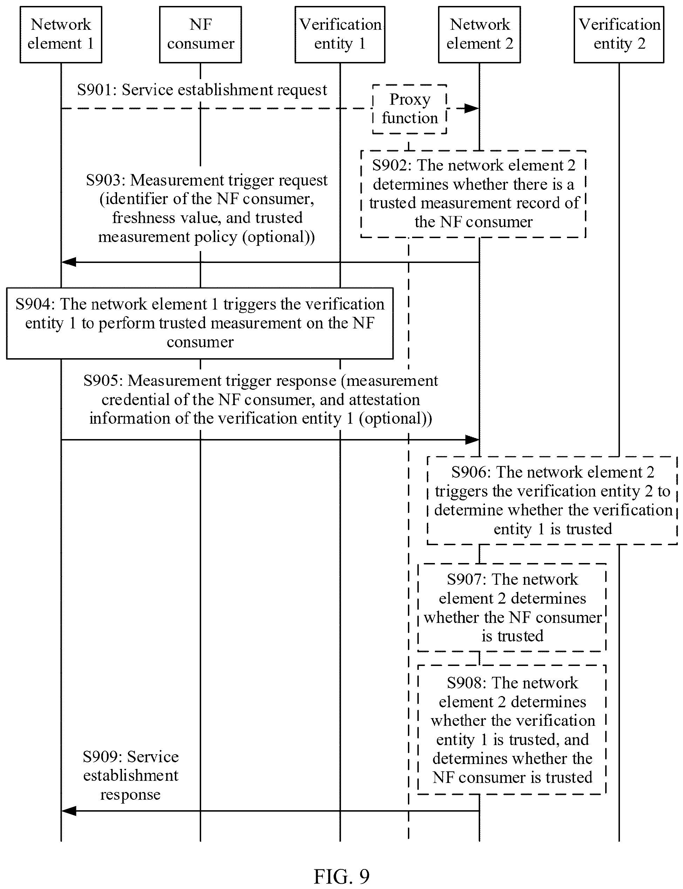

For ease of understanding, the following specifically describes an interaction procedure between the network elements/devices in the foregoing communication system by using method embodiments with reference to FIG. 9 to FIG. 14. The communication method provided in embodiments of this application may be applied to the foregoing communication system, and is specifically applied to various scenarios mentioned in the foregoing communication system. The following provides specific descriptions.

### Embodiment 1:

For example, FIG. 9 is a schematic flowchart 1 of the communication method according to an embodiment of this application. In Embodiment 1, a network element 1 in a trust domain 1 may request a network element 2 in a trust domain 2 to trigger an NF producer to provide a service of the trust domain 2, for example, a service needed by an NF consumer. In this case, the network element 2 may trigger trust measurement on the NF consumer by the network element 1, to provide a corresponding service when it is determined that the NF consumer is trusted, thereby avoiding a security risk.

Specifically, as shown in FIG. 9, a procedure of the communication method is as follows:
S901: The network element 1 sends a service establishment request to the network element 2. Correspondingly, the network element 2 receives the service establishment request from the network element 1.

The network element 1 may be the NF consumer, or a network element associated with the NF consumer, for example, a network element configured to manage the NF consumer. Similarly, the network element 2 may be the NF producer, or a network element associated with the NF producer, for example, a network element configured to manage the NF producer.

The service establishment request may be used to request the NF producer to provide a service needed by the NF consumer. For example, the service establishment request may be an authentication request (authentication request), a registration request (register request), a session establishment request (PDU session create request) message, or any other possible message. This is not limited.

The service establishment request may include an identifier of the NF consumer and a description of a service (optional).

The identifier of the NF consumer may indicate an identity of the NF consumer in the trust domain 1. The description of the service may indicate at least one of the following: a service objective, a service reason, or a service limitation condition of the service triggered by a service trigger entity. The service objective may indicate an objective that the service finally needs to achieve, for example, authentication, registration, and session establishment. The service reason may indicate a reason why the service trigger entity triggers the service, for example, the UE needs to register, or the UE needs to establish a session. The service limitation condition may indicate a condition that needs to be met to implement the service, for example, time validity, that is, a time period in which the service is valid, a specified network element, that is, a specified network element that needs to participate in the service, or any other condition. This is not limited.

The service trigger entity may be the network element 1, that is, the network element 1 may send the service establishment request based on a requirement of the network element 1. Alternatively, the service trigger entity may be another device, for example, UE in the trust domain 1, that is, the network element 1 may send the service establishment request based on a requirement of the UE. In this case, the service establishment request may further include an identifier of the UE, for example, a subscription permanent identifier (subscription permanent identifier, SUPI) or a generic public subscription identifier (generic public subscription identifier, GPSI) of the UE. This is not limited.

The network element 1 may directly send the service establishment request to the network element 2. Alternatively, the network element 1 may send the service establishment request to the network element 2 through a proxy function. For example, the proxy function may first receive the service establishment request from the network element 1, and then forward the service establishment request to the network element 2. The proxy function may be a network element in the trust domain 2 (as shown in FIG. 9), or the proxy function may be a network element in the trust domain 1. This is not limited.

It may be understood that S901 is an optional step. For example, the network element 2 may also trigger, by the network element 2, the NF producer to provide a service needed by the NF consumer.

S902: The network element 2 determines whether there is a trust measurement record of the NF consumer.

Because the trust measurement on the NF consumer through the verification entity 1 may be used by the network element 2 to determine whether the NF consumer is trusted, when the network element 2 does not determine whether the NF consumer is trusted, the network element 2 may determine whether there is the trust measurement record of the NF consumer.

In a possible implementation, the network element 2 may determine, based on a measurement credential of the NF consumer, whether there is the trust measurement record of the NF consumer.

The verification entity 1 may generate a measurement credential (token) of the NF consumer for each trust measurement on the NF consumer. For details, refer to the following related descriptions of S904. Details are not described. The measurement credential of the NF consumer may include the identifier of the NF consumer and a measurement result of the NF consumer. The measurement result may indicate whether the trust measurement on the NF consumer succeeds or the trust measurement fails, that is, indicate whether the NF consumer is trusted or untrusted. The measurement credential may further include another information element that may not be related to the current step. For details, refer to the following related descriptions of S904. Details are not described. The network element 1 may provide the measurement credential of the NF consumer for the network element 2. In this case, if the network element 1 directly provides the measurement credential of the NF consumer for the network element 2, the measurement credential may be stored by the network element 2. Alternatively, if the network element 1 provides the measurement credential of the NF consumer for the network element 2 through the proxy function, the measurement credential may be stored by the proxy function, or may still be stored by the network element 2. This is not limited.

Manner 1: The network element 2 stores the measurement credential of the NF consumer.

The network element 2 may store the measurement credential of the NF consumer by default. For example, the network element 2 may store the measurement credential regardless of whether the measurement result in the measurement credential indicates that the NF consumer is trusted or untrusted. After the network element 2 receives the service establishment request, the network element 2 may obtain the identifier of the NF consumer from the service establishment request, to determine, based on the identifier, whether there is the measurement credential of the NF consumer. The following cases are included:
(1) If there is no measurement credential of the NF consumer, the network element 2 cannot currently determine whether the NF consumer is trusted, needs to trigger the trust measurement on the NF consumer, and triggers performing of S903.
(2) If there is the measurement credential of the NF consumer, the network element 2 may determine, based on the measurement result in the measurement credential, whether the NF consumer is trusted. If the NF consumer is trusted, the network element 2 does not need to trigger the trust measurement on the NF consumer again, and trigger performing of S909. If the NF consumer is untrusted, the network element 2 may refuse to trigger the NF producer to provide the service needed by the NF consumer.
(3) If there is the measurement credential of the NF consumer, the network element 2 may determine whether the measurement credential of the NF consumer is valid. For example, the network element 2 may determine whether current time is within a time period that is preconfigured by the network element 2 for the measurement credential of the NF consumer. If the current time is beyond the time period, it indicates that the measurement credential of the NF consumer is invalid, and the network element 2 cannot currently determine whether the NF consumer is trusted, and triggers performing of S903. If the current time is within the time period, it indicates that the measurement credential of the NF consumer is valid, and the network element 2 may determine, based on the measurement result in the measurement credential, whether the NF consumer is trusted. If the NF consumer is trusted, the network element 2 triggers performing of S909. If the NF consumer is untrusted, the network element 2 may refuse to trigger the NF producer to provide the service needed by the NF consumer.

Alternatively, the network element 2 may store the measurement credential corresponding to a case in which the NF consumer is trusted. For example, if the measurement result in the measurement credential indicates that the NF consumer is trusted, the network element 2 stores the measurement credential; otherwise, the network element 2 does not store the measurement credential. After the network element 2 receives the service establishment request, the network element 2 may also obtain the identifier of the NF consumer from the service establishment request, to determine, based on the identifier, whether there is the measurement credential of the NF consumer. The following cases are also included:
(1) If there is no measurement credential of the NF consumer, the network element 2 cannot currently determine whether the NF consumer is trusted, and triggers performing of S903.
(2) If there is the measurement credential of the NF consumer, the network element 2 determines that the NF consumer is trusted, and triggers performing of S903.
(3) If there is the measurement credential of the NF consumer, the network element 2 may determine whether the measurement credential is valid. For details, refer to the foregoing descriptions. Details are not described. If the measurement credential of the NF consumer is invalid, the network element 2 cannot currently determine whether the NF consumer is trusted, and triggers performing of S903. If the measurement credential of the NF consumer is valid, the network element 2 determines that the NF consumer is trusted, and triggers performing of S909.

Manner 2: The proxy function stores the measurement credential of the NF consumer.

The proxy function may actively provide the network element 2 with the measurement credential of the NF consumer stored by the proxy function.

Specifically, after receiving the service establishment request, the proxy function may obtain the identifier of the NF consumer from the service establishment request, to determine, based on the identifier, whether there is a measurement credential of the NF consumer. If there is the measurement credential of the NF consumer, the proxy function may send the measurement credential to the network element 2, for example, include the measurement credential in the service establishment request, and then send the service establishment request to the network element 2. If there is no measurement credential of the NF consumer, the proxy function may notify the network element 2 of this situation. For example, the proxy function may directly forward the service establishment request to the network element 2, that is, the service establishment request does not carry the measurement credential of the NF consumer, to implicitly indicate that the proxy function does not store the measurement credential of the NF consumer. Alternatively, the proxy function may send an additional message to the network element 2, to explicitly indicate that the proxy function does not store the measurement credential of the NF consumer.

Alternatively, the proxy function may provide, based on a request of the network element 2, the network element 2 with the measurement credential of the NF consumer stored by the proxy function.

Specifically, after the network element 2 receives the service establishment request, the network element 2 may send a measurement credential request to the proxy function based on the service establishment request, to request the proxy function to provide the measurement credential of the NF consumer. For example, the measurement credential request may be any possible message. This is not limited. The measurement credential request may include the identifier of the NF consumer and a measurement credential description (optional). The measurement credential description may indicate that an objective of the measurement credential request is to request the proxy function to provide the measurement credential stored by the proxy function. The measurement credential description is an optional information element. For example, when there is no measurement credential description, the objective of the measurement credential request may be implicitly indicated through a message type of the measurement credential request.

It may be understood that the measurement credential description is an example name, for example, may be replaced with trust measurement objective, trust measurement description, or the like. This is not limited.

After receiving the measurement credential request, the proxy function may obtain the identifier of the NF consumer from the measurement credential request, to determine, based on the identifier, whether there is a measurement credential of the NF consumer. If there is the measurement credential of the NF consumer, the proxy function may send the measurement credential to the network element 2, for example, send a measurement credential response that carries the measurement credential. If there is no measurement credential of the NF consumer, the proxy function may notify the network element 2 of this situation. For example, the proxy function may send, to the network element 2, a measurement credential response that does not carry the measurement credential of the NF consumer, to implicitly indicate that the proxy function does not store the measurement credential of the NF consumer. Alternatively, the proxy function may not send any possible message to the network element 2, to implicitly indicate, by not sending a message within a timeout period, that the proxy function does not store the measurement credential of the NF consumer.

If the network element 2 obtains the measurement credential of the NF consumer from the proxy function, the network element 2 may determine, based on the measurement credential, whether the NF consumer is trusted. For a specific implementation, refer to the related descriptions of the foregoing manner 1. Details are not described. If the network element 2 does not obtain the measurement credential of the NF consumer from the proxy function, the network element 2 cannot currently determine whether the NF consumer is trusted, and triggers performing of S903.

It may be understood that the foregoing manner 1 and manner 2 may be implemented in combination. For example, when determining that the network element 2 does not store the measurement credential of the NF consumer, the network element 2 requests the proxy function to provide the measurement credential of the NF consumer.

In another possible implementation, the NF producer may directly determine whether there is the trust measurement record of the NF consumer.

The network element 1 may provide the measurement credential of the NF consumer for the network element 2. For details, refer to the foregoing related descriptions. Details are not described. In this case, if the network element 1 directly provides the measurement credential of the NF consumer for the network element 2, the network element 2 may generate and store the trust measurement record of the NF consumer based on the measurement credential. For example, the trust measurement record may include the identifier of the NF consumer and recording time. The recording time may indicate a time point at which the trust measurement record is generated. Alternatively, if the network element 1 provides the network element 2 with the measurement credential of the NF consumer through the proxy function, the proxy function may generate and store the trust measurement record of the NF consumer based on the measurement credential, or the network element 2 still generates and stores the trust measurement record of the NF consumer based on the measurement credential. This is not limited.

Manner 3: The network element 2 stores the trust measurement record of the NF consumer.

After the network element 2 receives the service establishment request, the network element 2 may obtain the identifier of the NF consumer, to determine, based on the identifier, whether there is the trust measurement record of the NF consumer. The following cases are included:
(1) If there is no trust measurement record of the NF consumer, the network element 2 cannot currently determine whether the NF consumer is trusted, needs to trigger the trust measurement on the NF consumer, and triggers performing of S903.
(2) If there is the trust measurement record of the NF consumer, the network element 2 determines that the NF consumer is trusted, and triggers performing of S909. Alternatively, if there is the trust measurement record of the NF consumer, the network element 2 may determine whether the measurement credential is valid. For example, the network element 2 may determine whether interval duration between current time and recorded time is less than preset duration configured by the network element 2 for the trust measurement record of the NF consumer. If the interval duration is greater than or equal to the preset duration, it indicates that the trust measurement record of the NF consumer is invalid, and the network element 2 cannot currently determine whether the NF consumer is trusted, and triggers performing of S903. If the interval duration is less than the preset duration, it indicates that the trust measurement record of the NF consumer is valid, and the network element 2 determines that the NF consumer is trusted, and triggers performing of S909.

Manner 4: The proxy function stores the trust measurement record of the NF consumer.

The proxy function may actively provide the network element 2 with the trust measurement record of the NF consumer stored by the proxy function. A specific implementation is similar to that of the foregoing manner 2. For understanding, refer to the manner 2. Details are not described. Alternatively, the proxy function may provide, based on a request of the network element 2, the network element 2 with the trust measurement record of the NF consumer stored by the proxy function. A specific implementation is also similar to that of the foregoing manner 2. For understanding, refer to the manner 2. Details are not described. Correspondingly, if the network element 2 obtains the trust measurement record of the NF consumer from the proxy function, the network element 2 may determine, based on the trust measurement record, whether the NF consumer is trusted. For a specific implementation, refer to the related descriptions of the foregoing manner 3. Details are not described. If the network element 2 does not obtain the trust measurement record of the NF consumer from the proxy function, the network element 2 cannot currently determine whether the NF consumer is trusted, and triggers performing of S903.

It may be understood that the foregoing manner 3 and manner 4 may be implemented in combination. For example, when determining that the network element 2 does not store the trust measurement record of the NF consumer, the network element 2 requests the proxy function to provide the trust measurement record of the NF consumer.

It may be further understood that S902 is an optional step. For example, if the network element 2 or the proxy function does not store the trust measurement record of the NF consumer, S902 is not performed.

S903: The network element 2 sends a measurement trigger request to the network element 1. Correspondingly, the network element 1 receives the measurement trigger request from the network element 2.

The measurement trigger request may be used to request the network element 1 to trigger the trust measurement on the NF consumer, or request the network element 1 to provide the measurement credential of the NF consumer. The measurement trigger request may be any possible message. This is not limited. The network element 2 directly sends the measurement trigger request to the network element 1, or may send the measurement trigger request to the network element 1 through the proxy function. This is not limited. The measurement trigger request may include a freshness value, an identifier of the NF consumer (optional), and a trust measurementtrust measurement policy (optional).

The freshness value may be used for trust measurement by the verification entity 1, for example, identify a measurement credential generated by the current trust measurement, to ensure that the measurement credential is a measurement credential corresponding to the measurement trigger request, or a measurement credential generated for the measurement trigger request. This ensures uniqueness of the current trust measurement. The freshness value may be a random number or a timestamp, for example, time or a date. This is not limited.

The identifier of the NF consumer may indicate that an object of the current trust measurement is the NF consumer. The identifier of the NF consumer is an optional information element. For example, if the network element 2 does not indicate the identifier of the NF consumer, the network element 1 may also trigger the verification entity 1 to perform the trust measurement on the NF consumer by default.

The trust measurement policy may indicate that the verification entity 1 needs to perform the trust measurement in a manner specified in the trust measurement policy. For example, the trust measurement policy may indicate the verification entity 1 to start to perform the trust measurement on whether the NF consumer is trusted, or indicate the verification entity 1 to perform the trust measurement on whether the NF consumer has a specified software version. This is not limited. The trust measurement policy is an optional information element. For example, if the network element 2 does not indicate the trust measurement policy, the verification entity 1 may perform the trust measurement according to a default trust measurement policy of the verification entity 1.

S904: The network element 1 triggers the verification entity 1 to perform the trust measurement on the NF consumer.

The network element 1 may send a measurement request to the verification entity 1. The measurement request may be used to trigger the verification entity 1 to perform the trust measurement on the NF consumer, and may be any possible message. This is not limited. The measurement request may include the identifier of the NF consumer, the freshness value, and the trust measurement policy (optional). The trust measurement policy is an optional information element. For example, if the network element 1 obtains the trust measurement policy in S903, the network element 1 may include the trust measurement policy in the measurement request; otherwise, the measurement request may not include the trust measurement policy.

After receiving the measurement request, the verification entity 1 may indicate a measurement entity (not shown in FIG. 9) corresponding to the verification entity 1 to perform the trust measurement on the NF consumer. For example, the verification entity 1 may send the identifier of the NF consumer/an identifier of a VNF and the trust measurement policy (optional) to the measurement entity.

The NF consumer is a representation of VNF instantiation. For the measurement entity, the NF consumer is a VNF, in other words, the measurement entity may sense the VNF, but may not sense the NF consumer. Therefore, if the measurement entity can sense the NF consumer, the verification entity 1 sends the identifier of the NF consumer. If the measurement entity cannot sense the NF consumer, the verification entity 1 may convert the identifier of the NF consumer into an identifier of a VNF that can be identified by the measurement entity, for example, including at least one of the following: an identifier of the VNF, an equipment room number of the VNF, a host number of the VNF, or an operating system number on a host of the VNF, which may also be referred to as descriptions of the VNF. For example, the verification entity 1 may traverse a table of a mapping relationship between an identifier of an NF consumer and an identifier of a VNF based on the identifier of the NF consumer, to determine an identifier of a VNF corresponding to the identifier of the NF consumer, so as to send the identifier of the VNF to the measurement entity. The mapping relationship table may be configured locally on the verification entity 1, or may be configured on another device/network element. This is not limited. For example, the verification entity 1 is a function in the NFVO, and the another device/network element may be a VNFM. In this case, the NFVO may access the VNFM to obtain the identifier of the VNF.

The trust measurement policy is an optional information element. For example, if the verification entity 1 obtains the trust measurement policy from the network element 1, the verification entity 1 may provide the trust measurement policy for the measurement entity; otherwise, the verification entity 1 does not provide the trust measurement policy, or provides a default trust measurement policy of the verification entity 1.

The measurement entity may perform the trust measurement on the NF consumer based on the identifier of the NF consumer/the identifier of the VNF and the trust measurement policy (optional), to feed back measurement evidence to the verification entity 1. For example, the measurement entity may address the VNF based on the identifier of the VNF, to find at least one VM corresponding to the VNF. The measurement entity may perform the trust measurement on the at least one VM to obtain measurement evidence, and feed back, to the verification entity 1, a measurement response carrying the measurement evidence. The measurement response may be any possible message. This is not limited. The measurement evidence may include at least one of the following: running data of the NF consumer or communication data of the NF consumer. The running data of the NF consumer may include at least one of the following: trusted boot data, a software version, a key derivation, a storage and update record, a signature of a critical file, a signature of critical code, memory and/or CPU usage, or any other possible data. This is not limited. The communication data of the NF consumer may include at least one of the following: a communication data volume, a quantity of exceptions during communication, a quantity of service alarms, or any other possible data. This is not limited.

After receiving the measurement evidence fed back by the measurement entity, the verification entity 1 may determine, based on the measurement evidence, whether the NF consumer is trusted. For example, the verification entity 1 may determine whether at least one of the following matches: Whether the trusted boot data matches preset trusted boot data, whether the software version matches a preset software version, whether the signature of the critical file matches a preset file signature, whether the signature of the critical code matches a preset code signature, whether network traffic data matches preset traffic data, whether the memory and/or CPU usage matches preset usage, whether a key is derived, whether the storage and update record matches a preset record, whether the quantity of exceptions during transmission matches a preset quantity, or whether the quantity of service alarms matches a preset quantity, or the like. If a quantity of unmatched data is greater than or equal to a preset quantity, the verification entity 1 may determine that the NF consumer is untrusted; or if a quantity of unmatched data is less than a preset quantity, the verification entity 1 may determine that the NF consumer is trusted. The preset quantity may be set based on an actual requirement. This is not limited herein. The verification entity 1 may generate the measurement credential of the NF consumer for the current trust measurement, and send the measurement credential of the NF consumer to the network element 1. The measurement credential of the NF consumer may include at least one of the following: a freshness value, an identifier of the NF consumer, an identifier of the verification entity 1, a signature of the verification entity 1, atrust measurement policy, a measurement result, trust measurement time, and the like. The identifier of the verification entity 1 may indicate an identity of the verification entity 1 in the trust domain 1, and the trust measurement time may indicate time at which the verification entity 1 triggers the trust measurement. In addition, for other parameters in the measurement credential of the NF consumer, refer to the foregoing related descriptions. Details are not described.

S905: The network element 1 sends a measurement trigger response to the network element 2. Correspondingly, the network element 2 receives the measurement trigger response from the network element 1.

The measurement trigger response may be used to respond to the measurement trigger request, and indicates that the trust measurement on the NF consumer is completed. The measurement trigger response may be any possible message. This is not limited. The network element 1 may directly send the measurement trigger response to the network element 2, or may send the measurement trigger response to the network element 2 through the proxy function. This is not limited. The measurement trigger response may include a measurement credential of the NF consumer and attestation information of the verification entity 1 (optional).

The attestation information of the verification entity 1 includes at least one of the following: deployment evidence of the verification entity 1, a credential of an institution to which the verification entity 1 belongs, subscription registration information of the verification entity 1, or any other possible information, to assist in verifying whether the verification entity 1 is trusted. The attestation information of the verification entity 1 is an optional information element. For example, whether the verification entity 1 is trusted may be verified only based on the measurement credential of the NF consumer. In this case, the measurement trigger response may not include the attestation information of the verification entity 1. Alternatively, if the verification entity 1 can be directly trusted by the network element 2 by default, the measurement trigger response may not include the attestation information of the verification entity 1.

It may be understood that the attestation information of the verification entity 1 may be preconfigured in the network element 1, or the network element 1 obtains the attestation information from the verification entity 1 in advance. This is not limited. The attestation information of the verification entity 1 is an example name, and is not limited. For example, the attestation information may be replaced with auxiliary attestation information of the verification entity 1, auxiliary information of the verification entity 1, or the like.

S906: The network element 2 triggers the verification entity 2 to determine whether the verification entity 1 is trusted.

If the verification entity 1 cannot be directly trusted by the network element 2, the network element 2 usually does not configure a profile related to the verification entity 1, and cannot verify whether the verification entity 1 is trusted. Alternatively, because the network element 2 may be a conventional core network element, the network element 2 may not have a function of verifying a verification entity. In this case, the network element 2 may trigger the verification entity 2 to determine whether the verification entity 1 is trusted.

For example, after receiving the measurement trigger response, the network element 2 may send a verification request to the verification entity 2 through a PACF (not shown in FIG. 9). The verification request may be used to trigger the verification entity 2 to determine whether the verification entity 1 is trusted. The verification request may be any possible message, for example, a subscription request message. This is not limited. If the network element 2 does not obtain the attestation information of the verification entity 1, the verification request may include the measurement credential of the NF consumer. In other words, the network element 2 may include only the measurement credential of the NF consumer in the verification request. If the network element 2 obtains the attestation information of the verification entity 1, the verification request may include at least one of the following: the measurement credential of the NF consumer or the attestation information of the verification entity 1. In other words, the network element 2 may include at least one of the measurement credentials of the NF consumer and the attestation information of the verification entity 1 in the verification request. After receiving the verification request, the verification entity 2 may determine, based on the verification request, whether the verification entity 1 is trusted. The following provides detailed descriptions.

Case 1: The verification request includes the measurement credential of the NF consumer, and the verification entity 2 may determine, based on the measurement credential of the NF consumer, whether the verification entity 1 is trusted. For example, the verification entity 2 may determine, based on the identity information of the verification entity 1 in the measurement credential of the NF consumer, whether the verification entity 1 is trusted. The identity information of the verification entity 1 may include at least one of the following: an identifier of the verification entity 1 or a signature of the verification entity 1.

In a possible verification manner, the verification entity 2 may determine whether the identifier of the verification entity 1 is in a trusted list or a blocklist preconfigured for the verification entity 2. If the identifier of the verification entity 1 is in the trusted list, or the identifier of the verification entity 1 is not in the blocklist, the verification entity 2 determines that the verification succeeds, in other words, the verification entity 1 is trusted; or if the identity of the verification entity 1 is not in the trusted list, or the identity of the verification entity 1 is in the blocklist, the verification entity 2 determines that the verification fails, in other words, the verification entity 1 is untrusted.

In another possible verification manner, the verification entity 2 may determine whether the signature of the verification entity 1 matches a signature preconfigured for the verification entity 2. If the signature of the verification entity 1 does not match the preconfigured signature, the verification entity 2 determines that the verification entity 1 is untrusted. If the signature of the verification entity 1 matches the preconfigured signature, the verification entity 2 verifies the signature of the verification entity 1. If the verification fails, the verification entity 2 determines that the verification entity 1 is untrusted. If the verification succeeds, the verification entity 2 determines that the verification entity 1 is trusted.

It may be understood that the foregoing verification manners may be implemented in combination. For example, if the identifier of the verification entity 1 is in the trusted list preconfigured for the verification entity 2, and the verification entity 1 successfully verifies the signature of the verification entity 1, the verification entity 2 determines that the verification entity 1 is trusted; otherwise, the verification entity 2 determines that the verification entity 1 is untrusted. In addition, the foregoing verification manners are only some examples, and there may be another verification manner. This is not limited in embodiments of this application.

Case 2: The verification request includes the attestation information of the verification entity 1, and the verification entity 2 may determine, based on the attestation information of the NF verification entity 1, whether the verification entity 1 is trusted.

In a possible verification manner, the verification entity 2 may determine, based on deployment evidence of the verification entity 1, whether the verification entity 1 is deployed in the trusted area preconfigured for the verification entity 2, for example, determine whether a deployment position indicated by the deployment evidence of the verification entity 1 is in the trusted area preconfigured for the verification entity 2. If the verification entity 1 is deployed in the trusted area preconfigured for the verification entity 2, the verification entity 2 determines that the verification succeeds, in other words, the verification entity 1 is trusted; or if the verification entity 1 is not deployed in the trusted area preconfigured for the verification entity 2, the verification entity 2 determines that the verification fails, in other words, the verification entity 1 is untrusted.

In another possible verification manner, the verification entity 2 may determine, based on a credential of an institution to which the verification entity 1 belongs, whether the verification entity 1 is deployed by a structure approved by the verification entity 2, for example, determine whether the credential of the institution to which the verification entity 1 belongs matches a credential of an institution preconfigured for the verification entity 2. If the verification entity 1 is deployed by the structure approved by the verification entity 2, the verification entity 2 determines that the verification succeeds, in other words, the verification entity 1 is trusted; or if the verification entity 1 is not deployed by the structure approved by the verification entity 2, the verification entity 2 determines that the verification fails, in other words, the verification entity 1 is untrusted.

In still another possible verification manner, the verification entity 2 may determine whether the subscription registration information of the verification entity 1 matches subscription registration information preconfigured for the verification entity 2. If the subscription registration information of the verification entity 1 matches the subscription registration information preconfigured for the verification entity 2, the verification entity 2 determines that the verification succeeds, in other words, the verification entity 1 is trusted; or if the subscription registration information of the verification entity 1 does not match the subscription registration information preconfigured for the verification entity 2, the verification entity 2 determines that the verification fails, in other words, the verification entity 1 is untrusted.

It may be understood that the foregoing verification manners may be implemented in any combination. For example, if the verification entity 1 is deployed in the trusted area preconfigured for the verification entity 2, the verification entity 1 is deployed by the structure approved by the verification entity 2, and the subscription registration information of the verification entity 1 matches the subscription registration information preconfigured for the verification entity 2, the verification entity 2 determines that the verification entity 1 is trusted; otherwise, the verification entity 2 determines that the verification entity 1 is untrusted. In addition, the foregoing verification manners are only some examples, and there may be another verification manner. This is not limited in embodiments of this application.

Case 3: The verification request includes the measurement credential of the NF consumer and the attestation information of the verification entity 1. The verification entity 2 may determine, based on the measurement credential of the NF consumer and the attestation information of the verification entity 1, whether the verification entity 1 is trusted. For a specific implementation, refer to the related descriptions of the foregoing case 1 and case 2. Details are not described.

The verification entity 2 may send a verification response to the network element 2 through a PACF (not shown in FIG. 9), and the verification response may indicate whether the verification entity 1 is trusted. For example, the verification response may include an identifier of the verification entity 1 and a verification result (optional), and the verification result may indicate whether the verification succeeds or the verification fails. The verification response may be any possible message, for example, a subscription response message. This is not limited. In this case, after receiving the verification response, the network element 2 may determine, based on the identifier of the verification entity 1 and the verification result in the verification response, whether the verification entity 1 is trusted. For example, the network element 2 may determine, based on the identifier of the verification entity 1 and the verification result indicating that the verification succeeds, that the verification on the verification entity 1 succeeds, to determine that the verification entity 1 is trusted, and perform S907. Alternatively, the network element 2 may determine, based on the identifier of the verification entity 1 and the verification result indicating that the verification fails, that the verification on the verification entity 1 fails, to determine that the verification entity 1 is untrusted. The network element 2 may refuse to trigger the NF producer to provide a service needed by the NF consumer.

It may be understood that the verification result is an optional information element. When there is no verification result, whether the verification succeeds or the verification fails may be implicitly indicated in another manner. For example, the verification response may implicitly indicate, by using a message type, whether the verification succeeds or the verification fails.

It should be noted that, if the network element 2 requests the verification entity 2 to verify the verification entity 1 in a subscription manner, for example, the verification request is a subscription request message, and the verification response is a subscription response message, verification performed on the verification entity 1 may be considered as a subscription event. Therefore, the subscription request message may further include an identifier of the subscription event, to indicate that the network element 2 needs to obtain a result corresponding to the subscription event. Correspondingly, the subscription response message may also include the identifier of the subscription event, to indicate that the verification entity 2 feeds back a result for the subscription event.

S907: The network element 2 determines whether the NF consumer is trusted.

The network element 2 may verify the measurement credential of the NF consumer, for example, determine whether one or more parameters in the measurement credential meet a preset condition, to determine, when the preset condition is met, whether the NF consumer is trusted.

In a possible verification manner, the network element 2 may determine, based on a measurement result in the measurement credential of the NF consumer, whether the NF consumer is trusted. For example, if the measurement result in the measurement credential indicates that the trust measurement succeeds, the network element 2 determines that the NF consumer is trusted, and performs S909. If the measurement result in the measurement credential indicates that the trust measurement fails, the network element 2 determines that the NF consumer is untrusted, and therefore may refuse to trigger the NF producer to provide a service needed by the NF consumer.

In another possible verification manner, the network element 2 may determine, based on the freshness value in the measurement credential of the NF consumer, whether the NF consumer is trusted. For example, the network element 2 may determine whether the freshness value in the measurement credential of the NF consumer matches a freshness value (S903) configured by the network element 2 for the NF consumer. If the freshness value in the measurement credential matches the freshness value configured by the network element 2 for the NF consumer, the network element 2 determines that the NF consumer is trusted. If the freshness value in the measurement credential does not match the freshness value configured by the network element 2 for the NF consumer, the network element 2 determines that the NF consumer is untrusted.

In still another possible verification manner, the network element 2 may determine, based on the trust measurement time in the measurement credential of the NF consumer, whether the NF consumer is trusted. For example, the network element 2 may determine whether the trust measurement time in the measurement credential is within trust measurement time configured by the network element 2 for the NF consumer. If the trust measurement time in the measurement credential is within the trust measurement time configured by the network element 2 for the NF consumer, the network element 2 determines that the NF consumer is trusted. If the trust measurement time in the measurement credential is beyond the trust measurement time configured by the network element 2 for the NF consumer, the network element 2 determines that the NF consumer is untrusted.

It may be understood that the foregoing verification manners may be implemented in any combination. For example, if the measurement result in the measurement credential of the NF consumer indicates that the trust measurement succeeds, the freshness value in the measurement credential matches the freshness value configured by the network element 2 for the NF consumer, and the trust measurement time in the measurement credential is within the trust measurement time configured by the network element 2 for the NF consumer, the network element 2 determines that the NF consumer is trusted; otherwise, the network element 2 determines that the NF consumer is untrusted. In addition, the foregoing verification manners are only some examples, and there may be another verification manner. This is not limited in embodiments of this application.

S908: The network element 2 determines whether the verification entity 1 is trusted, and determines whether the NF consumer is trusted.

A specific implementation in which the network element 2 determines whether the verification entity 1 is trusted is similar to that in S906. For understanding, refer to S906. Details are not described. In addition, a specific implementation of determining the NF consumer by the network element 2 is similar to that in S907. For understanding, refer to S907. Details are not described.

It should be noted that S906 and S907 and S908 are optional steps. For example, if the verification entity 1 cannot be directly trusted by the network element 2, the network element 2 performs S906 and S907 after S905, or if the verification entity 1 can be directly trusted by the network element 2, the network element 2 performs S908 after S905.

S909: The network element 2 sends a service establishment response to the network element 1. Correspondingly, the network element 1 receives the service establishment response from the network element 2.

The service establishment response may indicate that the network element 2 allows triggering the NF producer to provide a service needed by the NF consumer. For example, the service establishment response may be a PDU session establishment response (session establishment response) message, a registration response (register response) message, or any other possible message. This is not limited. On this basis, the NF producer may provide the service needed by the NF consumer for the NF consumer.

### Scenario 1

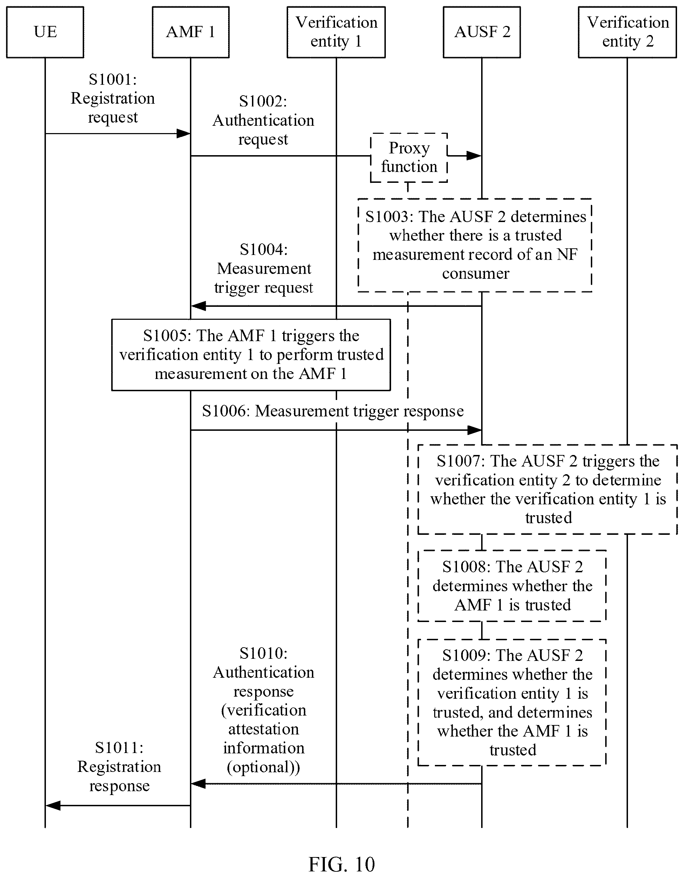

For example, FIG. 10 is a schematic flowchart 2 of a communication method according to an embodiment of this application. The scenario 1 is a specific scenario of Embodiment 1. In the scenario 1, a trust domain 1 is a PLMN 1, a network element 1 and an NF consumer each are an AMF 1, a trust domain 2 is a PLMN 2, and a network element 2 and an NF producer each are an AUSF 2. The AMF 1 may request the AUSF 2 to perform authentication on the UE. In this case, the AUSF 2 may trigger trust measurement on the AMF 1, to complete authentication on the UE when it is determined that the AMF 1 is trusted, thereby avoiding a security risk.

Specifically, as shown in FIG. 10, a procedure of the communication method is as follows:
S1001: The UE sends a registration request to the AMF 1. Correspondingly, the AMF 1 receives the registration request from the UE.

The registration request may include an identifier of the UE and an identifier of the PLMN 1, to request the AMF 1 to register the UE with the PLMN 1. It may be understood that, for the UE, the PLMN 1 may be a VPLMN of the UE, or may be an HPLMN. This is not limited.

S1002: The AMF 1 sends an authentication request to the AUSF 2. Correspondingly, the AUSF 2 receives the authentication request from the AMF 1.

The AMF 1 may learn, based on the authentication request, that the UE wants to register with the PLMN 1. Therefore, the AMF 1 may send the authentication request (namely, a service establishment request) to the AUSF 2, to obtain information required for registering the UE with the PLMN 1. The authentication request may include an identifier of the UE, an identifier of the AMF 1, and a description of a service (optional), to request the AUSF 2 to provide an authentication service (namely, a service needed by the NF consumer).

In addition, for a specific implementation of S1002, refer to the related descriptions in S901. Details are not described.

S1003: The AUSF 2 determines whether there is a trust measurement record of the AMF 1.

S1004: The AUSF 2 sends a measurement trigger request to the AMF 1. Correspondingly, the AMF 1 receives the measurement trigger request from the AUSF 2.

S1005: The AMF 1 triggers the verification entity 1 to perform trust measurement on the AMF 1.

S1006: The AMF 1 sends a measurement trigger response to the AUSF 2. Correspondingly, the AUSF 2 receives the measurement trigger response from the AMF 1.

S1007: The AUSF 2 triggers the verification entity 2 to determine whether the verification entity 1 is trusted.

S1008: The AUSF 2 determines whether the AMF 1 is trusted.

S1009: The AUSF 2 determines whether the verification entity 1 is trusted, and determines whether the AMF 1 is trusted.

For a specific implementation of S1003 to S1009, refer to the related descriptions in S902 to S908. Details are not described.

S1010: The AUSF 2 sends an authentication response to the AMF 1. Correspondingly, the AMF 1 receives the authentication response from the AUSF 2.

The authentication response (namely, a service establishment response) may indicate an authentication service provided by the AUSF 2. For example, the authentication service may include information needed by the UE to register with the PLMN 1, and the information is used by the UE to register with the PLMN 1.

Optionally, the authentication response may further include verification attestation information. The verification attestation information may be used to describe a case in which the AUSF 2 or the verification entity 1 has completed verification. For example, the verification attestation information may be information generated and signed by the AUSF 2, and is used to describe a case in which the AUSF 2 has completed verification, so that the UE can determine, based on the verification attestation information, whether the AUSF 2 is trusted. Alternatively, the verification attestation information may be information generated and signed by the verification entity 1, and is used to describe a case in which the verification entity 1 has completed verification, so that the UE can determine, based on the verification attestation information, whether the verification entity 1 is trusted.

S1011: The AMF 1 sends a registration response (register response) to the UE. Correspondingly, the UE receives the registration response from the AMF 1.

The registration response may indicate that the AMF 1 has registered the UE with the PLMN 1. For example, the AMF 1 determines, based on an authentication result of the UE, that the UE is trusted, and registers the UE with the PLMN 1. Alternatively, the registration response may indicate that the AMF 1 refuses to register the UE with the PLMN 1. For example, the AMF 1 determines, based on an authentication result of the UE, that the UE is untrusted, and therefore refuses to register the UE with the PLMN 1.

Optionally, when the registration response indicates that the AMF 1 has registered the UE with the PLMN 1, the registration response may further include the verification attestation information. In this way, the UE may determine, based on the verification attestation information, whether the AUSF 2 or the verification entity 1 is trusted, for example, determine whether the UE successfully verifies the signature of the AUSF 2 or the verification entity 1. If the UE successfully verifies the signature of the AUSF 2 or the verification entity 1, that is, the AUSF 2 or the verification entity 1 is trusted, the UE may continue communication. If the UE fails to verify the signature of the AUSF 2 or the verification entity 1, that is, the AUSF 2 or the verification entity 1 is untrusted, the UE may consider that there is a security risk, and stop communication.

### Scenario 2

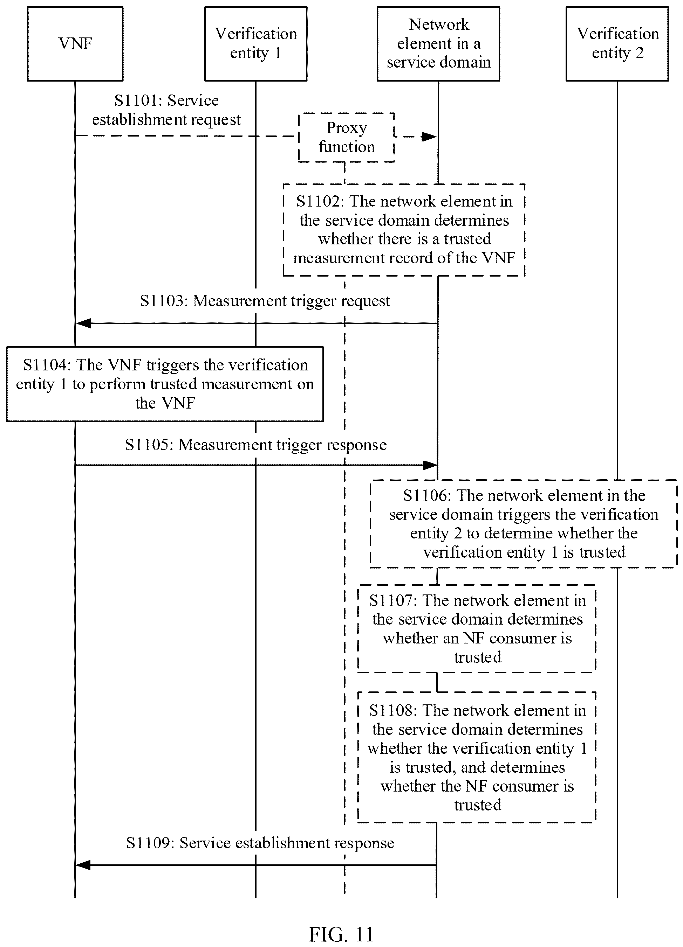

For example, FIG. 11 is a schematic flowchart 3 of a communication method according to an embodiment of this application. The scenario 2 is another specific scenario of Embodiment 1. In the scenario 2, a trust domain 1 is an NFV domain, and a trust domain 2 is a service domain. An NF consumer may be a VNF, a VNF instance (virtual network function instance, VNFI), or a VNF component instance (virtual network function component instance, VNFCI), and the NF producer may be a network element in the service domain. The VNF may request to register with the service domain. In this case, a network element in the service domain may trigger trust measurement on the VNF, so that when it is determined that the VNF is trusted, the VNF is allowed to register with the service domain, thereby avoiding a security risk.

Specifically, as shown in FIG. 11, a procedure of the communication method is as follows:
S1101: The VNF sends a service establishment request to the network element in the service domain. Correspondingly, the network element in the service domain receives the service establishment request from the VNF.

The service establishment request may be used to request the network element in the service domain to provide a service needed by the VNF. The service establishment request may be any possible message. This is not limited. The service establishment request may include an identifier of the VNF and a description of the service (optional).

The identifier of the VNF may indicate an identity of the VNF in the NFV domain. The description of the service may indicate at least one of the following: a service objective, a service reason, or a service limitation condition of the service triggered by a service trigger entity. The service objective may indicate an objective that the service finally needs to achieve, for example, accessing the service domain. The service reason may indicate a reason for triggering the service, for example, a VNF application needs to access the service domain. The service limitation condition may indicate a condition that needs to be met to implement the service, for example, time validity, that is, a time period in which the service is valid, a specified network element, that is, a specified network element that needs to participate in the service, or any other condition. This is not limited.

The VNF may trigger, based on a requirement of the VNF application, for example, the VNF application needs to access the service domain, to send the service establishment request to a network element in the service domain, or may trigger, in another manner, to send the service establishment request. This is not limited.

It may be understood that S1101 is an optional step. For example, a network element in a service domain may trigger, by the network element, to provide a service for the VNF.

S1102: The network element in the service domain determines whether there is a trust measurement record of the VNF.

For a specific implementation of S1102, refer to the related descriptions in S902. Details are not described.

S1103: The network element in the service domain sends a measurement trigger request to the VNF. Correspondingly, the VNF receives the measurement trigger request from the network element in the service domain.

S1104: The VNF triggers the verification entity 1 to perform trust measurement on the VNF.

S1105: The VNF sends a measurement trigger response to the network element in the service domain. Correspondingly, the network element in the service domain receives the measurement trigger response from the VNF.

S1106: The network element in the service domain triggers the verification entity 2 to determine whether the verification entity 1 is trusted.

S1107: The network element in the service domain determines whether the NF consumer is trusted.

S1108: The network element in the service domain determines whether the verification entity 1 is trusted, and determines whether the NF consumer is trusted.

S1109: The network element in the service domain sends a service establishment response to the VNF. Correspondingly, the VNF receives the service establishment response from the network element in the service domain.

A specific implementation of S1103 to S1109 is similar to that in S903 to S909. For understanding, refer to S903 to S909. Details are not described.

It should be noted that, in Embodiment 3, the network element in the service domain may also directly trigger, through the verification entity 2, the verification entity 1 to perform the trust measurement on the VNF. A specific implementation principle is similar to that in Embodiment 2. For understanding, refer to Embodiment 2. Details are not described.

### Scenario 3

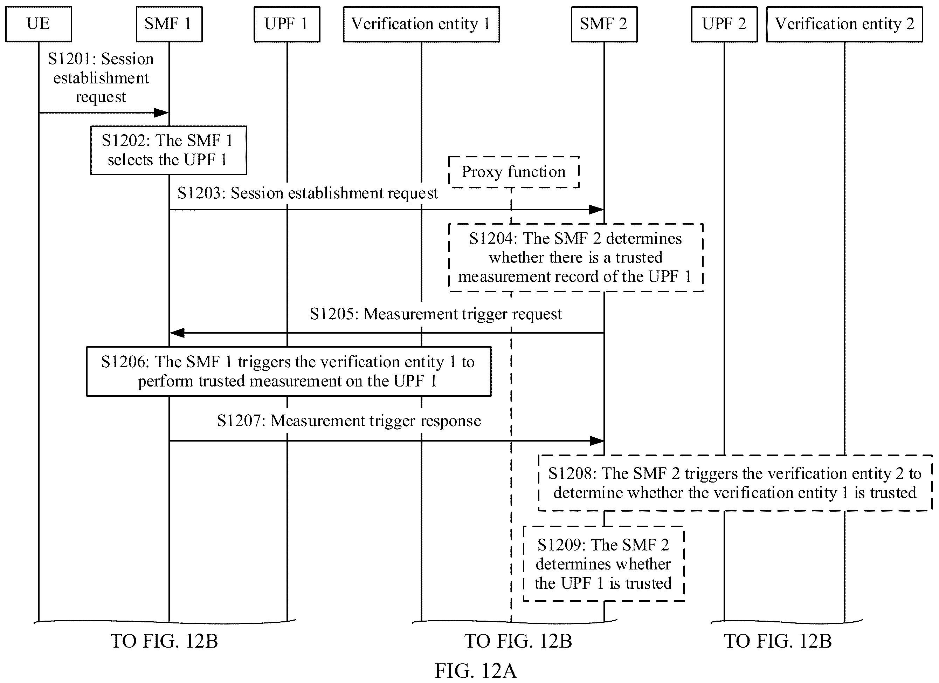

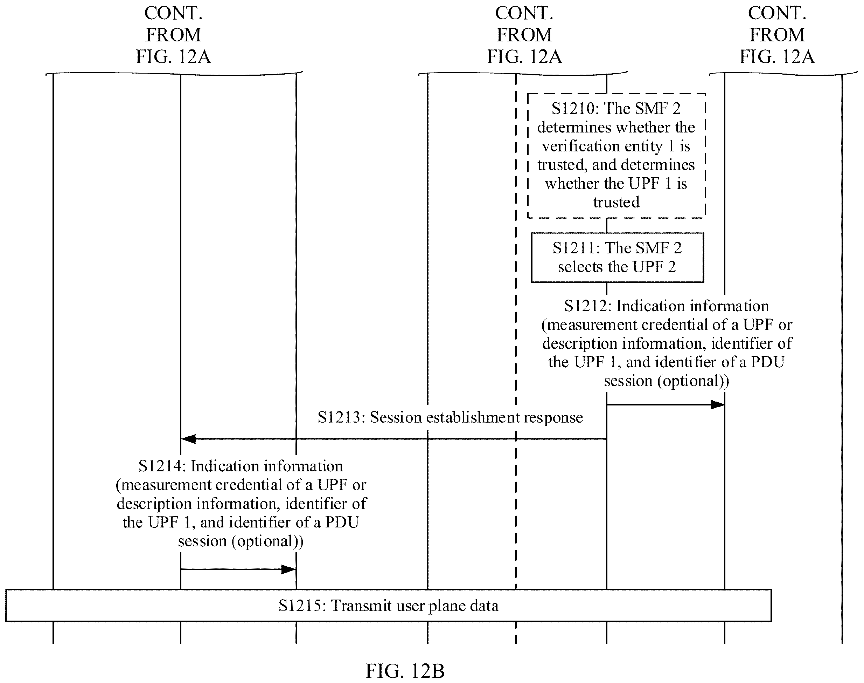

For example, FIG. 12A and FIG. 12B are a schematic flowchart 4 of a communication method according to an embodiment of this application. The scenario 3 is another specific scenario of Embodiment 1. In the scenario 3, a trust domain 1 is a PLMN 1, a trust domain 2 is a PLMN 2, a network element 1 is an SMF 1, an NF consumer is a UPF 1, a network element 2 is an SMF 2, and an NF producer is a UPF 2. The SMF 1 may request the SMF 2 to establish a session corresponding to the UPF 1. In this case, the SMF 2 may trigger trust measurement on the UPF 1, to trigger establishment of the session corresponding to the UPF 1 when it is determined that the UPF 1 is trusted, thereby avoiding a security risk.

Specifically, as shown in FIG. 12A and FIG. 12B, a procedure of the communication method is as follows:
S1201: UE sends a session establishment request (PDU session establishment request) to the SMF 1. Correspondingly, the SMF 1 receives the session establishment request from the UE.

The session establishment request may include an identifier of the UE and an identifier of the PLMN 1, and is used to request the SMF 1 to establish a PDU session for the UE, so that the UE receives and sends service data. For the UE, the PLMN 1 may be a VPLMN of the UE, or may be an HPLMN. This is not limited.

S1202: The SMF 1 selects the UPF 1.

The SMF 1 may preferentially select a UPF that stores a measurement credential of the UPF, for example, the UPF 1. For example, a table of a mapping relationship between an identifier of the PLMN 1 and an identifier of a UPF in the PLMN 1 is preconfigured by the SMF 1. Each UPF in the mapping relationship table may be a UPF that stores the measurement credential of the UPF. The SMF 1 may traverse the table of mapping relationship based on the identifier of the PLMN 1, to select a UPF suitable for the UE, for example, the UPF 1.

In addition, for the SMF 1 to select the UPF 1, refer to the related descriptions in TS 23.501. Details are not described.

S1203: The SMF 1 sends a session establishment request to the SMF 2. Correspondingly, the SMF 2 receives the session establishment request from the SMF 1.

The session establishment request (namely, the service establishment request) may include the identifier of the UE, an identifier of the UPF 1, and a description of a service (optional), to request the SMF 2 to establish a PDU session corresponding to the UPF 1 (namely, a service needed by the NF consumer).

In addition, for a specific implementation of S1203, refer to the related descriptions in S901. Details are not described.

S1204: The SMF 2 determines whether there is a trust measurement record of the UPF 1.

S1205: The SMF 2 sends a measurement trigger request to the SMF 1. Correspondingly, the SMF 1 receives the measurement trigger request from the SMF 2.

S1206: The SMF 1 triggers the verification entity 1 to perform trust measurement on the UPF 1.

S1207: The SMF 1 sends a measurement trigger response to the SMF 2. Correspondingly, the SMF 2 receives the measurement trigger response from the SMF 1.

S1208: The SMF 2 triggers the verification entity 2 to determine whether the verification entity 1 is trusted.

S1209: The SMF 2 determines whether the UPF 1 is trusted.

S1210: The SMF 2 determines whether the verification entity 1 is trusted, and determines whether the UPF 1 is trusted.

For a specific implementation of S1204 to S1210, refer to the related descriptions in S902 to S908. Details are not described.

S1211: The SMF 2 selects the UPF 2.

The SMF 2 may select a UPF 2 suitable for the UE. For a specific implementation, refer to the related descriptions in TS 23.501. Details are not described.

S1212: The SMF 2 sends indication information to the UPF 2. Correspondingly, the UPF 2 receives the indication information from the SMF 2.

The indication information may include the measurement credential of the UPF or description information of the measurement credential of the UPF (description information for short), an identifier of the UPF 1, and an identifier of the PDU session (optional).

The description information may be an identifier or a hash value of the measurement credential of the UPF. This is not limited. The identifier of the UPF 1 indicates that the measurement credential of the UPF or the description information belongs to the UPF 1. The identifier of the PDU session may indicate a measurement credential of the UPF 1 or description information associated with the PDU session, that is, indicate that data of the PDU session needs to be verified based on the measurement credential of the UPF 1 or the description information, to determine whether the data of the PDU session is from the UPF 1. It may be understood that the identifier of the PDU session is an optional information element. If there is no identifier of the PDU session, it indicates that the measurement credential of the UPF 1 or the description information may be associated with all PDU sessions corresponding to the UPF 1 by default.

S1213: The SMF 2 sends a session establishment response (PDU session create response) to the SMF 1. Correspondingly, the SMF 1 receives the session establishment response from the SMF 2.

The session establishment response (namely, a service establishment response) may indicate that the SMF 2 has created a PDU session corresponding to the UPF 1, for example, includes an identifier of the UPF 2 corresponding to the PDU session.

S1214: The SMF 1 sends indication information to the UPF 1. Correspondingly, the UPF 1 receives the indication information from the SMF 1.

For a specific implementation of the indication information, refer to the related descriptions in S1212. Details are not described. In this case, the PDU session is established, and a user plane path between the PLMN 1 and the PLMN 2 is established.

S1215: Transmit user plane data.

The UE may send the user plane data to the UPF 1 through the PDU session. The UPF 1 may sign the user plane data of the PDU session based on the measurement credential of the UPF 1 or the description information, and send a signed user plane data to the UPF 2 through the PDU session. The UPF 2 may verify the signed user plane data based on the measurement credential of the UPF 1 or the description information, to determine whether the data is from the trusted UPF 1. If the data is from the trusted UPF 1, the UPF 2 continues to process the data; otherwise, the UPF 2 may discard the data, to ensure communication security of the user plane.

### Embodiment 2

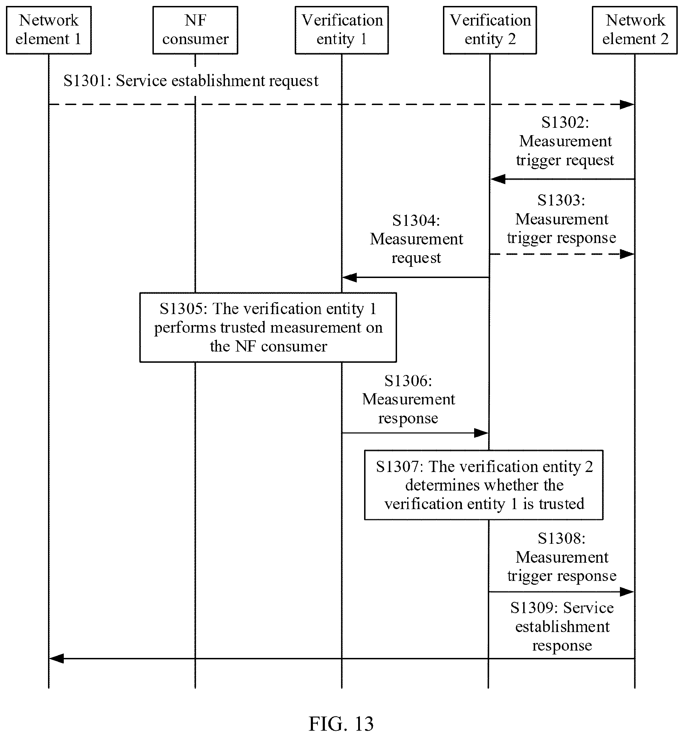

For example, FIG. 13 is a schematic flowchart 5 of a communication method according to an embodiment of this application. In Embodiment 2, a network element 1 in a trust domain 1 may request a network element 2 in a trust domain 2, to trigger an NF producer to provide a service needed by an NF consumer. In this case, the network element 2 may directly trigger the verification entity 1 to perform trust measurement on the NF consumer, to provide a corresponding service when it is determined that the NF consumer is trusted, to avoid a security risk.

Specifically, as shown in FIG. 13, a procedure of the communication method is as follows:
S1301: The network element 1 sends a service establishment request to the network element 2. Correspondingly, the network element 2 receives the service establishment request from the network element 1.

For a specific implementation of S1301, refer to the related descriptions in S901. Details are not described.

S1302: The network element 2 sends a measurement trigger request to the verification entity 2. Correspondingly, the verification entity 2 receives the measurement trigger request from the network element 2.

The measurement trigger request may be used to request the verification entity 2 to trigger trust measurement on the NF consumer. The measurement trigger request may be any possible message. This is not limited. The network element 2 (for example, a PACF or any other possible network element) may directly send the measurement trigger request to the verification entity 2, or may send the measurement trigger request to the verification entity 2 through a PACF (not shown in FIG. 12A and FIG. 12B). This is not limited. The measurement trigger request may include a freshness value (optional), an identifier of an event (optional), an identifier of the NF consumer (optional), a trust measurement policy (optional), and an identifier of the verification entity 1 (optional).

The identifier of the verification entity 1 may be used by the verification entity 2 to address the verification entity 1. For example, the verification entity 2 is a network management system, and the verification entity 1 is a cloud management system. The identifier of the verification entity 1 may indicate that the verification entity 1 is specifically a cloud management system in an area, so that the verification entity 2 can address the verification entity 1. The freshness value is an optional information element. For example, because the verification entity 2 is a verification entity trusted by the network element 2, the network element 2 may not provide the freshness value. In addition, for the freshness value, the identifier of the event, the identifier of the NF consumer, and the trust measurement policy, refer to the related descriptions in the foregoing Embodiment 1. Details are not described.

S1303: The verification entity 2 sends a measurement trigger response to the network element 2. Correspondingly, the network element 2 receives the measurement trigger response from the verification entity 2.

The measurement trigger response may indicate whether the NF consumer is trusted. For example, the measurement trigger response may include an identifier of the NF consumer, a description of a measurement result (optional), an identifier of an event (optional), and an identifier of the verification entity 1 (optional).

The description of the measurement result may indicate that the trust measurement succeeds or the trust measurement fails. For the description of the measurement result, when there is no description of the measurement result, the measurement trigger response may implicitly indicate, in another manner, that the trust measurement succeeds or the trust measurement fails. For example, the measurement trigger response may implicitly indicate, through a message type, that the trust measurement succeeds or the trust measurement fails. The identity of the verification entity 1 is an optional information element. For example, if the trust measurement policy sent by the network element 2 indicates that the verification entity 2 needs to provide the identifier of the verification entity used for trust measurement, the verification entity 2 may provide the identifier of the verification entity 1; otherwise, the verification entity 2 may not provide the identifier of the verification entity 1. In addition, for the identifier of the NF consumer, the identifier of the event, and the identifier of the verification entity 1, refer to the related descriptions in the foregoing scenario 1.

The verification entity 2 may pre-store a measurement credential of the NF consumer. In this way, the verification entity 2 may directly feed back the measurement trigger response to the network element 2 based on the measurement credential of the NF consumer, and does not need to perform the trust measurement again, to reduce overheads. After receiving the measurement trigger response, the network element 2 may determine, based on the identifier of the NF consumer and the description of the measurement result in the measurement trigger response, whether the NF consumer is trusted. For example, the network element 2 may indicate, based on the identifier of the NF consumer and the measurement result, that the trust measurement succeeds, and determine that the trust measurement on the NF consumer succeeds, to determine that the NF consumer is trusted, and perform S1309. Alternatively, the network element 2 may indicate, based on the identifier of the NF consumer and the measurement result, that the trust measurement fails, and determine that the trust measurement on the NF consumer fails, to determine that the NF consumer fails. In this case, the network element 2 may refuse to trigger the NF producer to provide the service needed by the NF consumer.

It may be understood that S1303 is an optional step. If the verification entity 2 does not pre-store the measurement result of the NF consumer, the verification entity 2 does not perform S1303, and performs S1304.

S1304: The verification entity 2 sends a measurement request to the verification entity 1. Correspondingly, the verification entity 1 receives the measurement request from the verification entity 2.

The measurement request may be used to request the verification entity 1 to trigger the trust measurement on the NF consumer, or to request the verification entity 1 to provide the measurement credential of the NF consumer. The measurement request may be any possible message. This is not limited. The measurement request may include an identifier of the verification entity 1, an identifier of the NF consumer/an identifier of the VNF, a freshness value (optional), and atrust measurement policy.

The identifier of the verification entity 1 may indicate that the verification entity 1 needs to perform the trust measurement. The verification entity 2 may obtain the identifier of the verification entity 1 from the measurement trigger request, or the verification entity 2 may obtain the identifier of the verification entity 1 locally. This is not limited.

The identifier of the NF consumer/the identifier of the VNF is mainly used for identifier conversion. For example, the verification entity 2 may convert the identifier of the NF consumer into the identifier of the VNF. For details, refer to the related descriptions in S904.

S1305: The verification entity 1 performs the trust measurement on the NF consumer.

For a specific implementation of S1305, refer to the related descriptions in S904. Details are not described.

S1306: The verification entity 1 sends a measurement response to the verification entity 2. Correspondingly, the verification entity 2 receives the measurement response from the verification entity 1.

The measurement response may be used to respond to the measurement request, to indicate that the trust measurement on the NF consumer has been completed. The measurement response may be any possible message. This is not limited. The measurement response may include the measurement credential of the NF consumer and attestation information of the verification entity 1 (optional). For details, refer to the related descriptions in S905. Details are not described.

It may be understood that, if the verification entity 1 pre-stores the measurement credential of the NF consumer, the verification entity 1 may not perform S1305, and perform S1306.

S1307: The verification entity 2 determines whether the verification entity 1 is trusted.

For a specific implementation of S1307, refer to the related descriptions in S906. Details are not described.

S1308: The verification entity 2 sends a measurement trigger response to the network element 2. Correspondingly, the network element 2 receives the measurement trigger response from the verification entity 2.

For details of the measurement trigger response, refer to the related descriptions in S1303. Details are not described.

It may be understood that S1304 to S1307 are a possible implementation. This is not limited. There may be a plurality of verification entities 1, and the plurality of verification entities 1 may be deployed in a same trust domain or different trust domains. This is not limited. The verification entity 2 may send a measurement request to each verification entity 1. In this case, each verification entity 1 may feed back, to the verification entity 2, a measurement credential obtained by the verification entity 1 by performing a measurement on the NF consumer, and attestation information of each verification entity 1 (optional). Optionally, the verification entity 2 may determine, based on the measurement credential fed back by each verification entity 1 and the attestation information of the verification entity 1 (optional), whether the verification entity 1 is trusted. When a plurality of verification entities 1 are all trusted, or verification entities 1 of which a quantity exceeds a preset quantity and that are in the plurality of verification entities 1 are trusted, the verification entity 2 may feed back a measurement trigger response to the network element 2 based on measurement credentials respectively fed back by the plurality of verification entities 1, namely, a plurality of measurement credentials.

For example, the verification entity 2 may be a verification function in an OSS/a BSS, and the network element 2 may be an administrator interface of the OSS/BSS. In this case, the network element 2 needs to determine whether an NFV system is trusted. The NFV system includes an NF in a service domain and a VNF in an NFV domain. Therefore, the verification entity 2 may trigger a verification entity 1a in the service domain to perform trust measurement on the NF, and trigger a verification entity 1b in the NFV domain to perform trust measurement on the VNF. When both the NF and the VNF are trusted, the verification entity 2 determines that the NFV system is trusted, and feeds back a measurement credential of the NFV system to the network element 2.

S1309: The network element 2 sends a service establishment response to the network element 1. Correspondingly, the network element 1 receives the service establishment response from the network element 2.

For a specific implementation of S1309, refer to the related descriptions in S909. Details are not described.

It should be noted that Embodiment 2 may also be applied to a specific scenario, for example, a registration or session establishment scenario. For a specific implementation principle, refer to the related descriptions in the foregoing scenarios 1 to 3. Details are not described.

In conclusion, the foregoing embodiments have the following technical effect:
(1) When the NF consumer requests the NF producer to provide a corresponding service, the NF producer may perform end-to-end verification, that is, trigger verification on whether the NF consumer is trusted. In this way, a malicious network element can be prevented from maliciously forging a valid credential, and a security risk can be avoided.
(2) The verification performed by the NF producer on the NF consumer may be applied to any service procedure, for example, a registration procedure and a session establishment procedure, to reduce security risks of these procedures.
(3) In a cross-domain case, the verification entity 2/the network element in the service domain in the trust domain 2 may verify the verification entity 1 in the trust domain 1. In this way, it can be ensured that a subsequent procedure is continued only when the verification entity 1 is trusted, to reduce a security risk.
(4) If trust measurement is performed on the verification entity 1 through the PACF, the network element/a proxy function in the service domain may store a corresponding measurement credential, so that the verification entity 1 may not subsequently perform the trust measurement through the PACF. Alternatively, the NF producer may not perform the trust measurement on the NF consumer through the PACF, and the NF producer, by the NF producer, verifies whether the NF consumer is trusted. In this way, a quantity of times that the PACF is triggered can be reduced, and a load of the PACF can be reduced, and a single point of failure of the PACF can be avoided.

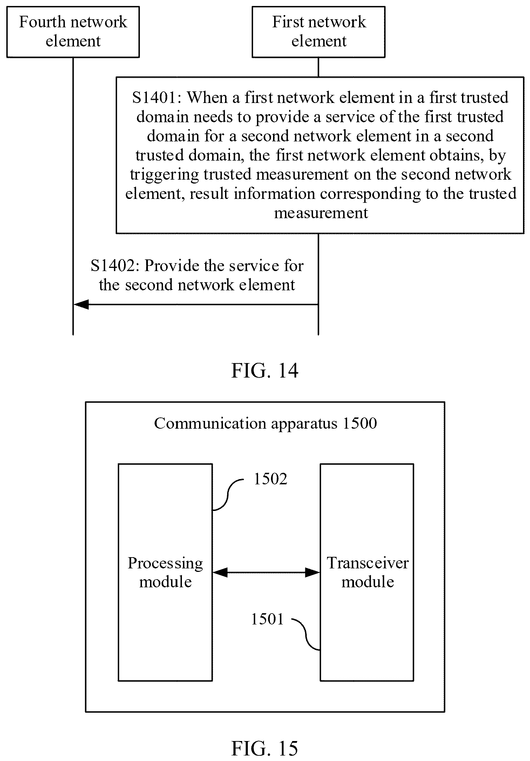

With reference to FIG. 9 to FIG. 13, the foregoing describes in detail a specific procedure of the communication method provided in embodiments of this application in the foregoing embodiments. The following describes an overall procedure of the communication method with reference to FIG. 14.

For example, FIG. 14 is a schematic flowchart 6 of the communication method. The communication method mainly relates to communication between a first network element in a first trust domain and a fourth network element in a second trust domain. The first trust domain may be the trust domain 2, the first network element may be the network element 2, the second trust domain may be the trust domain 1, and the fourth network element may be the network element 1. As shown in FIG. 14, a procedure of the communication method is as follows:
S1401: When the first network element in the first trust domain needs to provide a service of the first trust domain for a second network element in the second trust domain, the first network element obtains, by triggering trust measurement on the second network element, result information corresponding to the trust measurement.

The first network element may determine, by the first network element, that the service of the first trust domain needs to be provided for the second network element. For example, the first network element may determine, based on a service requirement of the first network element, that the service needs to be provided for the second network element; or the first network element may determine, based on a received message, for example, a service establishment request, that the service of the first trust domain needs to be provided for the second network element. On this basis, the first network element may send a measurement request to the fourth network element. The fourth network element receives the measurement request returned by the first network element for a service request, to send a measurement response to the first network element.

In a possible manner, the fourth network element and the second network element are a same network element. When the first network element needs to provide the service of the first trust domain for the second network element, the first network element may send a measurement request to the second network element. The measurement request is used to request the second network element to trigger the trust measurement on the second network element. The second network element may trigger, based on the measurement request, a second verification entity in the second trust domain to perform the trust measurement on the second network element, to obtain the result information corresponding to the trust measurement on the second network element. The result information corresponding to the trust measurement on the second network element may also be a measurement credential of the second network element, or a measurement token of the second network element. This is not limited. The second network element may send a measurement response to the first network element, and the first network element may receive the measurement response from the second network element. The measurement response may indicate the result information corresponding to the trust measurement on the second network element.

It can be learned that, when the fourth network element and the second network element are a same network element, the first network element may directly indicate the second network element to trigger the trust measurement on the second network element, to improve communication efficiency. For details, refer to the related descriptions in the foregoing S901 to S905.

Alternatively, in another possible manner, the fourth network element and the second network element may be different network elements. In this case, the fourth network element may also be understood as the following third network element. When the first network element needs to provide the service of the first trust domain for the second network element, the first network element may send a measurement request to the third network element in the second trust domain. The third network element may be a network element associated with the second network element, and the measurement request may be used to request the third network element to trigger trust measurement on the second network element. The third network element may trigger, based on the measurement request, the second verification entity to perform the trust measurement on the second network element, to obtain the result information corresponding to the trust measurement on the second network element. The third network element may send a measurement response to the first network element, and the first network element may receive the measurement response from the third network element. The measurement response may indicate the result information corresponding to the trust measurement on the second network element.

It can be seen that, when the first network element may not be able to directly communicate with the second network element, the first network element may still trigger the trust measurement on the second network element by indicating the third network element in the second trust domain, to ensure that the trust measurement can still be effectively performed. For details, refer to the related descriptions in S901 to S905.

The following describes scenarios.

Scenario A: The first trust domain may be a first operator network (for example, the PLMN 2), the first network element may be an authentication network element (for example, the ASUF 2), the second trust domain may be a second operator network (for example, the PLMN 1), and the second network element may be an access and mobility management network element (for example, the AMF 1). In this case, an access and mobility management network element may send a service establishment request, for example, an authentication request, to an authentication network element. The authentication network element may receive an authentication request from the access and mobility management network element, and send the measurement request to the access and mobility management network element based on the authentication request. The access and mobility management network element receives the measurement request returned by the authentication network element for the authentication request. The authentication request may be used to request the authentication network element to provide an authentication service for the access and mobility management network element, and the measurement request may be used to request the access and mobility management network element to trigger trust measurement on the access and mobility management network element. The access and mobility management network element may trigger, based on the authentication request and the measurement request, the second verification entity (for example, the foregoing verification entity 1) to perform the trust measurement on the access and mobility management network element, to obtain result information corresponding to the trust measurement on the access and mobility management network element. The access and mobility management network element may send a measurement response to the authentication network element, to indicate the result information corresponding to the trust measurement on the access and mobility management network element.

It can be learned that, when the first trust domain is the first operator network and the second trust domain is the second operator network, the trust measurement on the second network element triggered by the first network element may be reused in a registration scenario of a terminal. For example, the authentication network element may trigger the trust measurement on the access and mobility management network element, to ensure communication security in the registration scenario.

In addition, for a specific implementation of the scenario A, refer to the related descriptions in S1002 to S1006. Details are not described.

Scenario B: The first trust domain may be a service domain or a service domain, the second trust domain may be a virtualization infrastructure domain (for example, the foregoing NFV domain), and the second network element may be a virtual network function (for example, the foregoing VNF). The virtual network function may send a service establishment request, for example, a registration request, to the first network element (for example, a network element in the foregoing service domain). The first network element may receive the registration request from the virtual network function, and send a measurement request to the virtual network function based on the registration request. The virtual network function may receive the measurement request returned by the first network element for the registration request. The registration request may be used to request the first network element to provide a registration service for the virtual network function, and the measurement request may be used to request the virtual network function to trigger trust measurement on the virtual network function. The virtual network function may trigger, based on the measurement request, the second verification entity to perform the trust measurement on the virtual network function, to obtain result information corresponding to the trust measurement on the virtual network function. The virtual network function may send a measurement response to the authentication network element, to indicate the result information corresponding to the trust measurement on the virtual network function.

It can be learned that, when the first trust domain is the service domain, and the second trust domain is the virtualization infrastructure domain, the trust measurement triggered by the first network element for the second network element may be reused in a registration scenario of the virtual network function. For example, the first network element may trigger the trust measurement on the virtual network function, to ensure communication security in the registration scenario.

In addition, for a specific implementation of the scenario B, refer to the related descriptions in S1101 to S1105. Details are not described.

Scenario C: The first trust domain may be a first operator network, the first network element may be a first session management network element (the foregoing SMF 2), the second trust domain may be a second operator network, the second network element may be a second user plane network element (the foregoing UPF 1), and the third network element may be a second session management network element (the foregoing SMF 1). The second session management network element may send a service establishment request, for example, a session establishment request, to the first session management network element. The first session management network element may receive the service establishment request from the second session management network element, and send a measurement request to the second session management network element based on the session establishment request. The second session management network element may receive the measurement request returned by the first session management network element for the session establishment request. The session establishment request may be used to request the first session management network element to provide a session establishment service for the second user plane network element, and the measurement request may be used to request the second session management network element to trigger the trust measurement on the second user plane network element. The second session management network element may trigger, based on the measurement request, the second verification entity to perform the trust measurement on the second user plane network element, to obtain result information corresponding to the trust measurement on the second user plane network element. The second session management network element may send a measurement response to the first session management network element, to indicate the result information corresponding to the trust measurement on the second user plane network element.

It can be learned that, when the first trust domain is the first operator network and the second trust domain is the second operator network, the trust measurement triggered by the first network element for the second network element may be reused in a session establishment scenario. For example, the first session management network element may trigger the trust measurement on the second session management network element, to ensure communication security in the session scenario.

In addition, for a specific implementation of the scenario C, refer to the related descriptions in S1203 to S1206. Details are not described.

S1402: When the first network element determines, based on the result information corresponding to the trust measurement on the second network element, that the second network element is trusted, the first network element provides the service for the second network element. Correspondingly, when the second network element is trusted, the fourth network element obtains the service provided by the first network element for the second network element.

The first network element may determine, based on that at least one item in the result information corresponding to the trust measurement on the second network element meets the preset condition, that the second network element is trusted. That at least one item in the result information meets a preset condition may include: an identifier representing the measurement credential matches a preconfigured identifier, an identifier of a measured network element matches an identifier of the second network element, or the result information corresponding to trust measurement on the second network element indicates that the second network element is trusted, to implement comprehensive verification on the second network element. For a specific implementation, refer to the related descriptions in S906 to S909.

The following provides descriptions with reference to the foregoing scenario A to scenario C.

Scenario A: The authentication network element may send an authentication response to the access and mobility management network element. The authentication response indicates an authentication service, and the measurement request is used to request the access and mobility management network element to trigger the trust measurement on the access and mobility management network element. For example, the terminal belongs to the first operator network, and the authentication service may indicate information needed by the terminal to register with the second operator network, to ensure that the terminal can register with the second operator network. In addition, for a specific implementation of the scenario A, refer to the related descriptions in S1007 to S1010. Details are not described.

Scenario B: The first network element may send an authentication response to the virtual network function. The authentication response indicates the registration service. The registration service indicates that the first network element allows the virtual network function to be registered with the service domain, to ensure that the virtual network function can be successfully registered with the service domain. In addition, for a specific implementation of the scenario B, refer to the related descriptions in S1106 to S1109. Details are not described.

Scenario C: The first session management network element sends a session establishment response to the second session management network element. Correspondingly, the second session management network receives the session establishment response from the first session management network element. The session establishment creation response indicates the session establishment service. For example, the first user plane network element (for example, the UPF 2) is a network element in the first operator network, and the session establishment service indicates that the second user plane network element needs to establish a session with the first user plane network element, to ensure that the session can be successfully established.

Optionally, the second session management network element may send indication information to the second user plane network element. The indication information may indicate that the second user plane network element needs to identify data, to indicate that the data is data sent by the second user plane network element. In addition, the first session management network element may further send indication information to the first user plane network element. Correspondingly, the access and mobility management network element receives the authentication response from the authentication network element. The indication information indicates the first user plane network element to verify whether data received by the first user plane network element is from the second user plane network element, to ensure that the first user plane network element can process only the data from the trusted second user plane network element. This ensures user plane communication security.

In addition, for a specific implementation of the scenario C, refer to the related descriptions in S1208 to S1212. Details are not described.

In conclusion, when the second network element in the second trust domain requests, in a cross-domain manner, the first network element in the first trust domain to provide a corresponding service, the first network element may perform end-to-end verification, that is, trigger verification on whether the second network element is trusted, so that the first network element provides the service for the second network element only when it is determined that the second network element is trusted. In this way, a security risk during cross-domain access can be avoided.

In a possible design solution, for the scenario A, before S1401, the access and mobility management network element may receive a registration request from the terminal. In this way, the access and mobility management network element sends the authentication request to the authentication network element based on the registration request. In addition, the authentication network element may also send verification attestation information to the access and mobility management network element. Correspondingly, the access and mobility management network element receives the verification attestation information from the authentication network element, and sends the verification attestation information to the terminal. The verification attestation information is used by the terminal to verify whether the authentication network element or the first verification entity associated with the authentication network element is trusted. It can be learned that a registration procedure is usually triggered by the terminal, for example, the terminal requests to register with the second operator network. Therefore, the verification attestation information may also be provided to the terminal, to implement bidirectional verification, and further ensure communication security.

Alternatively, for the scenario C, before S1401, the second session management network element may receive a session establishment request from the terminal. The session establishment request is used by the terminal to request to establish a session. In this way, the second session management network element determines the second user plane network element based on the session establishment request. It may be understood that the second session management network element may preferentially select a user plane network element having trust measurement record, so that the trust measurement may not be performed this time, to reduce overheads.

In addition, for a specific implementation of the design solution, refer to the related descriptions in S1010 and S1201 to S1203. Details are not described.

In a possible design solution, because there may be no trust relationship between the first network element and a verification entity in the second trust domain, before S 1402, the first network element may further receive information about a second verification entity from the second network element, and determine, based on the information about the second verification entity, that the second verification entity is trusted. The information about the second verification entity may include at least one of the following: identity information of the second verification entity or attestation information of the second verification entity. The identity information of the second verification entity may include at least one of the following: an identifier of the second verification entity or a signature of the second verification entity. The attestation information of the second verification entity may include at least one of the following: deployment evidence of the second verification entity, a credential of an institution to which the second verification entity belongs, or subscription registration information of the second verification entity. In other words, before determining whether the second network element is trusted, the first network element may further determine whether the second verification entity that performs the trust measurement on the second network element is trusted, to further ensure communication security.

Specifically, the first network element may send a verification request to the first verification entity (for example, the foregoing verification entity 2) in the first trust domain. The first verification entity in the first trust domain receives the verification request from the first network element in the first trust domain. The verification request may be used to request the first verification entity to verify, based on the information about the second verification entity, whether the second verification entity is trusted. For example, the verification request is used to request to subscribe to a first event, and the first event may be that the first verification entity needs to verify, based on the information about the second verification entity, whether the second verification entity is trusted. In this way, the first verification entity sends a verification response to the first network element based on the verification request, and the first network element receives the verification response from the first verification entity. The verification response indicates that the second verification entity is trusted, or the verification response indicates that the second verification entity is untrusted.

It may be understood that, if the second verification entity cannot be trusted by the first network element, the first network element usually does not configure a profile related to the second verification entity, and therefore cannot directly verify whether the second verification entity is trusted. In this case, the first network element may further trigger the first verification entity trusted by the first network element to verify whether the second verification entity is trusted, to ensure communication security. Certainly, when the first network element is configured with the profile related to the second verification entity, the first network element may also directly verify whether the second verification entity is trusted. This is not limited.

It may also be understood that, because the information about the second verification entity may also be carried in the foregoing result information, for example, the measurement credential of the second network element, it may also be understood that the first network element determines, based on the measurement credential of the second network element, that the second verification entity is trusted. Further, it may also be understood that the first verification entity determines, based on the measurement credential of the second network element, that the second verification entity is trusted.

In addition, for a specific implementation of the design solution, refer to the related descriptions in S906 to S908, S1007 to S1009, and S1106 to S1108. Details are not described.

In a possible design solution, when the first network element needs to provide the service of the first trust domain for the second network element, the first network element may determine that there is no trust measurement record of the second network element. Alternatively, when the first network element needs to provide the service of the first trust domain for the second network element, the first network element may determine that there is the trust measurement record of the second network element, but the trust measurement record is invalid. In other words, when the trust measurement is not performed on the second network element, or the trust measurement is performed on the second network element, but the trust measurement is invalid, the first network element triggers the trust measurement on the second network element; otherwise, the first network element may not trigger the trust measurement on the second network element, but may directly communicate with the second network element, to reduce the overheads.

In addition, for a specific implementation of the design solution, refer to the related descriptions in S902, S1003, and S1102. Details are not described.

It should be noted that the foregoing implementation of the communication method is only some examples, and the communication method may also be applied to a scenario in which the first network element requests the first verification entity to trigger trust measurement on the second network element. For example, when the first network element needs to provide the service of the first trust domain for the second network element, the first network element may send a measurement request to the first verification entity in the first trust domain, to receive a measurement response from the first verification entity. The measurement request is used to request the first verification entity to trigger the trust measurement on the second network element, and the measurement response indicates the result information corresponding to the trust measurement on the second network element. In other words, when the second network element may not be trusted by the first network element currently, the first network element may trigger the trust measurement on the second network element through the first verification entity trusted by the first network element, to avoid direct communication with the second network element, and further ensure communication security. For details, refer to the related descriptions in Embodiment 2. Details are not described.

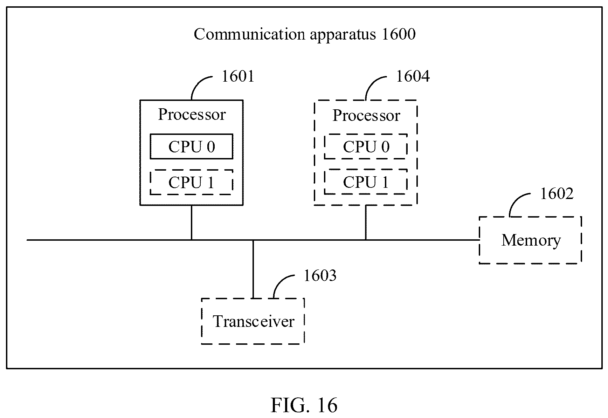

The communication methods provided in embodiments of this application are described above in detail with reference to FIG. 9 to FIG. 14. Communication apparatuses configured to perform the communication methods provided in embodiments of this application are described below in detail with reference to FIG. 15 and FIG. 16.

For example, FIG. 15 is a diagram 1 of a structure of a communication apparatus according to an embodiment of this application. As shown in FIG. 15, the communication apparatus 1500 includes a transceiver module 1501 and a processing module 1502. For ease of description, FIG. 15 shows only main components of the communication apparatus.

In some embodiments, the communication apparatus 1500 may be used in the communication system shown in FIG. 8, and performs a function of the foregoing first network element/network element 2. The transceiver module 1501 may be configured to perform a function of sending and receiving a message by the first network element/network element 2, for example, a function in steps such as S901. The processing module 1502 may perform a function of the first network element/network element 2 other than sending and receiving a message, for example, a function in steps such as S902.

For example, when a first network element in a first trust domain needs to provide a service of the first trust domain for a second network element in a second trust domain, the processing module 1502 is configured to obtain, by triggering trust measurement on the second network element, result information corresponding to the trust measurement. The processing module 1502 is further configured to: when the first network element determines, based on the result information corresponding to the trust measurement, that the second network element is trusted, control the transceiver module 1501 to provide a service of the first trust domain for the second network element.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a network device, may be a chip (system) or another component or assembly that may be disposed in a network device, or may be an apparatus including a network device. This is not limited in this application.

In addition, for technical effect of the communication apparatus 1500, refer to the technical effect of the foregoing communication method. Details are not described herein.

In some other embodiments, the communication apparatus 1500 may be used in the communication system shown in FIG. 8, and perform a function of the first verification entity/verification entity 2. The transceiver module 1501 may be configured to perform a function of sending and receiving a message by the first verification entity/verification entity 2, for example, a function in steps such as S906. The processing module 1502 may perform a function of the first verification entity/verification entity 2 other than sending and receiving a message, for example, a function in steps such as S906.

For example, the transceiver module 1501 is configured to receive a verification request from a first network element in a first trust domain. The verification request is used to request the communication apparatus 1500 in the first trust domain to verify, based on information of a second verification entity, whether the second verification entity is trusted, where the second verification entity is in a second trust domain, and there is no trust relationship between the first network element and a verification entity in the second trust domain. In this way, the processing module 1502 is configured to control, based on the verification request, the transceiver module 1501 to send a verification response to the first network element. The verification response indicates that the second verification entity is trusted, or the verification response indicates that the second verification entity is untrusted.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a network device, may be a chip (system) or another component or assembly that may be disposed in a network device, or may be an apparatus including a network device. This is not limited in this application.

In addition, for technical effect of the communication apparatus 1500, refer to the technical effect of the foregoing communication method. Details are not described herein.

In some other embodiments, the communication apparatus 1500 may be used in the communication system shown in FIG. 8, and performs a function of the foregoing second network element/network element 1. The transceiver module 1501 may be configured to perform a function of sending and receiving a message by the second network element/network element 1, for example, a function in steps such as S901. The processing module 1502 may perform a function of the second network element/network element 1 other than sending and receiving a message, for example, a function in steps such as S904.

For example, the communication apparatus 1500 is a network element in a second trust domain. When a first network element in a first trust domain needs to provide a service of the first trust domain for a second network element in the second trust domain, the transceiver module 1501 is configured to receive a measurement request from the first network element, and the processing module 1502 is configured to control, based on the measurement request, the transceiver module 1501 to send a measurement response to the first network element. A fourth network element is associated with the second network element, the measurement request indicates the communication apparatus 1500 to trigger trust measurement on the second network element, and the measurement response indicates whether the second network element is trusted. In this way, when the second network element is trusted, the processing module 1502 is configured to obtain the service provided by the first network element for the second network element.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a network device, may be a chip (system) or another component or assembly that may be disposed in a network device, or may be an apparatus including a network device. This is not limited in this application.

In addition, for technical effect of the communication apparatus 1500, refer to the technical effect of the foregoing communication method. Details are not described herein.

For example, FIG. 16 is a diagram 2 of a structure of a communication apparatus according to an embodiment of this application. The communication apparatus may be a terminal, or a chip (system) or another component or assembly that can be disposed in the terminal. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected through a communication bus.

The following describes components of the communication apparatus 1600 in detail with reference to FIG. 16.

The processor 1601 is a control center of the communication apparatus 1600, and may be one processor, or may be a collective term of a plurality of processing elements. For example, the processor 1601 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1601 may perform various functions of the communication apparatus 1600 by running or executing a software program stored in the memory 1602 and invoking data stored in the memory 1602, for example, perform the communication methods shown in FIG. 9 to FIG. 14.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store the software program for performing the solutions of this application, and the processor 1601 controls the execution. For a specific implementation, refer to the foregoing method embodiments. Details are not described herein.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or data structure and that can be accessed by a computer. However, this is not limited thereto. The memory 1602 may be integrated with the processor 1601, or may exist independently, and is coupled to the processor 1601 through an interface circuit (not shown in FIG. 16) of the communication apparatus 1600. This is not specifically limited in embodiments of this application.

The transceiver 1603 is configured to communicate with another communication apparatus. For example, the communication apparatus 1600 is a terminal, and the transceiver 1603 may be configured to communicate with a network device or communicate with another terminal device. For another example, the communication apparatus 1600 is a network device, and the transceiver 1603 may be configured to communicate with a terminal or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in embodiments of this application.

It should be noted that the structure of the communication apparatus 1600 shown in FIG. 16 does not constitute a limitation on the communication apparatus. An actual communication apparatus may include more or fewer components than those shown in the figure, or a combination of a part of the components, or an arrangement of different components.

In addition, for technical effect of the communication apparatus 1600, refer to the technical effect of the communication method in the foregoing method embodiments. Details are not described herein.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware assembly, or the like. The general-purpose processor may be a microprocessor, or the processor may be any conventional processor, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When the software is used to implement the embodiments, all or some of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiments are only examples. For example, division into the units is only logical function division, and may be other division in an actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
when a first network element in a first trust domain needs to provide a service of the first trust domain for a second network element in a second trust domain, obtaining, by the first network element by triggering trust measurement on the second network element, result information corresponding to the trust measurement; and
when the first network element determines, based on the result information, that the second network element is trusted, providing, by the first network element, the service for the second network element.

2. The method according to claim 1, wherein the obtaining, by the first network element by triggering trust measurement on the second network element, result information corresponding to the trust measurement comprises:
sending, by the first network element, a measurement request to the second network element, wherein the measurement request is used to request the second network element to trigger the trust measurement on the second network element; and
receiving, by the first network element, a measurement response from the second network element, wherein the measurement response indicates the result information corresponding to the trust measurement.

3. The method according to claim 2, wherein the first trust domain is a first operator network, the first network element is an authentication network element, the second trust domain is a second operator network, and the second network element is an access and mobility management network element; and the sending, by the first network element, a measurement request to the second network element comprises:
receiving, by the authentication network element, an authentication request from the access and mobility management network element, wherein the authentication request is used to request the authentication network element to provide an authentication service for the access and mobility management network element; and
sending, by the authentication network element, the measurement request to the access and mobility management network element based on the authentication request, wherein the measurement request is used to request the access and mobility management network element to trigger the trust measurement on the access and mobility management network element.

4. The method according to claim 3, wherein the providing, by the first network element, the service for the second network element comprises:
sending, by the authentication network element, an authentication response to the access and mobility management network element, wherein the authentication response indicates the authentication service.

5. The method according to claim 4, wherein the authentication service indicates information needed by a terminal to register with the second operator network, and the terminal belongs to the first operator network.

6. The method according to claim 5, wherein the method further comprises:
sending, by the authentication network element, verification attestation information to the access and mobility management network element, wherein the verification attestation information is used by the terminal to verify whether the authentication network element or a first verification entity associated with the authentication network element is trusted, the first verification entity is in the first operator network, the authentication network element or the first verification entity is used to verify whether a second verification entity is trusted, the second verification entity is used to perform the trust measurement on the access and mobility management network element, and the second verification entity is in the second operator network.

7. The method according to claim 2, wherein the first trust domain is a service domain, the second trust domain is a virtualization infrastructure domain, and the second network element is a virtual network function; and the sending, by the first network element, a measurement request to the second network element comprises:
receiving, by the first network element, a registration request from the virtual network function, wherein the registration request is used to request the first network element to provide a registration service for the virtual network function; and
sending, by the first network element, the measurement request to the virtual network function based on the registration request, wherein the measurement request is used to request the virtual network function to trigger the trust measurement on the virtual network function.

8. The method according to claim 7, wherein the providing, by the first network element, the service for the second network element comprises:
sending, by the first network element, a registration response to the virtual network function, wherein the registration response indicates the registration service.

9. The method according to claim 8, wherein the registration service indicates that the first network element allows the virtual network function to register with the service domain.

10. The method according to claim 1, wherein the obtaining, by the first network element by triggering trust measurement on the second network element, result information corresponding to the trust measurement comprises:
sending, by the first network element, a measurement request to a third network element in the second trust domain, wherein the third network element is a network element associated with the second network element, and the measurement request is used to request the third network element to trigger the trust measurement on the second network element; and
receiving, by the first network element, a measurement response from the third network element, wherein the measurement response indicates the result information corresponding to the trust measurement.

11. The method according to claim 10, wherein the first trust domain is a first operator network, the first network element is a first session management network element, the second trust domain is a second operator network, the second network element is a second user plane network element, and the third network element is a second session management network element; and the sending, by the first network element, a measurement request to a third network element in the second trust domain comprises:
receiving, by the first session management network element, a session establishment request from the second session management network element, wherein the session establishment request is used to request the first session management network element to provide a session establishment service for the second user plane network element; and
sending, by the first session management network element, the measurement request to the second session management network element based on the session establishment request, wherein the measurement request is used to request the second session management network element to trigger the trust measurement on the second user plane network element.

12. The method according to claim 11, wherein the providing, by the first network element, the service for the second network element comprises:
sending, by the first session management network element, a session establishment response to the second session management network element, wherein session establishment creation indicates the session establishment service.

13. The method according to claim 12, wherein the session establishment service indicates that the second user plane network element needs to establish a session with a first user plane network element, and the first user plane network element is a network element in the first operator network.

14. The method according to claim 13, wherein the method further comprises:
sending, by the first session management network element, indication information to the first user plane network element, wherein the indication information indicates the first user plane network element to verify whether data received by the first user plane network element is from the second user plane network element.

15. The method according to any one of claims 1 to 14, wherein before the first network element determines, based on the result information, that the second network element is trusted, the method further comprises:
receiving, by the first network element, information about a second verification entity from the second network element, wherein the second verification entity is a verification entity used to measure the second network element, the second verification entity is in the second trust domain, and there is no trust relationship between the first network element and a verification entity in the second trust domain; and
determining, by the first network element based on the information about the second verification entity, that the second verification entity is trusted.

16. The method according to claim 15, wherein the determining, by the first network element based on the information about the second verification entity, that the second verification entity is trusted comprises:
sending, by the first network element, a verification request to a first verification entity in the first trust domain, wherein the verification request is used to request the first verification entity to verify, based on the information about the second verification entity, whether the second verification entity is trusted; and
receiving, by the first network element, a verification response from the first verification entity, wherein the verification response indicates that the second verification entity is trusted.

17. The method according to claim 16, wherein the verification request is used to request to subscribe to a first event, and the first event is that the first verification entity needs to verify, based on the information about the second verification entity, whether the second verification entity is trusted.

18. The method according to any one of claims 15 to 17, wherein the information about the second verification entity comprises at least one of the following: identity information of the second verification entity or attestation information of the second verification entity.

19. The method according to claim 18, wherein the identity information of the second verification entity comprises at least one of the following: an identifier of the second verification entity or a signature of the second verification entity.

20. The method according to claim 18, wherein the attestation information of the second verification entity comprises at least one of the following: deployment evidence of the second verification entity, a credential of an institution to which the second verification entity belongs, or subscription registration information of the second verification entity.

21. The method according to any one of claims 1 to 20, wherein before the obtaining, by the first network element by triggering trust measurement on the second network element, result information corresponding to the trust measurement, the method further comprises:
determining, by the first network element, that there is no trust measurement record of the second network element; or
determining, by the first network element, that there is a trust measurement record of the second network element, but the trust measurement record is invalid.

22. The method according to claim 21, wherein the determining, by the first network element, that there is no trust measurement record of the second network element comprises:
determining, by the first network element, that at least one network element does not store the trust measurement record of the second network element; or
the determining, by the first network element, that there is a trust measurement record of the second network element, but the trust measurement record is invalid comprises:
determining, by the first network element, that at least one network element stores the trust measurement record of the second network element, but the trust measurement record is invalid, wherein
the at least one network element comprises the first network element or a proxy function, wherein the proxy function is a relay for communication between the first network element and the second network element.

23. The method according to claim 1, wherein the obtaining, by the first network element by triggering trust measurement on the second network element, result information corresponding to the trust measurement comprises:
sending, by the first network element, a measurement request to a first verification entity in the first trust domain, wherein the measurement request is used to request the first verification entity to trigger the trust measurement on the second network element; and
receiving, by the first network element, a measurement response from the first verification entity, wherein the measurement response indicates the result information corresponding to the trust measurement.

24. The method according to any one of claims 1 to 23, wherein that the first network element determines, based on the result information, that the second network element is trusted comprises:
determining, by the first network element based on at least one item in the result information meets a preset condition, that the second network element is trusted, wherein that at least one item in the result information meets the preset condition comprises: an identifier representing the measurement credential matches a preconfigured identifier, an identifier of a measured network element matches an identifier of the second network element, or the result information indicates that the second network element is trusted.

25. A communication apparatus, wherein the apparatus comprises a module configured to perform the method according to any one of claims 1 to 24.

26. A communication apparatus, wherein the communication apparatus comprises a processor and a memory, the memory is configured to store computer instructions, and when the processor executes the instructions, the communication apparatus is enabled to perform the communication method according to any one of claims 1 to 24.

27. A computer-readable storage medium, wherein the computer-readable storage medium comprises a computer program or instructions, and when the computer program or the instructions are run on a computer, the computer is enabled to perform the communication method according to any one of claims 1 to 24.

28. A computer program product, wherein the computer program product comprises a computer program or instructions, and when the computer program or the instructions are run on a computer, the computer is enabled to perform the communication method according to any one of claims 1 to 24.
